# EUROPEAN PATENT SPECIFICATION

(11) **EP 1 503 557 B1**
(45) Date of publication and mention of the grant of the patent: **17.11.2010**
(21) Application number: 04017221.5
(22) Date of filing: 21.07.2004
(51) Int. Cl.: H04L 27/26

(54) **Detection of frame synchronization in a multicarrier receiver**
Erfassung von Rahmensynchronisation in einem Mehrträgerempfänger
Détection de synchronisation de trame dans un récepteur multiporteuse

(30) Priority: 30.07.2003 JP 2003282444; 29.03.2004 JP 2004095918
(43) Date of publication of application: 02.02.2005
(73) Proprietor: Panasonic Corporation, Kadoma-shi Osaka 571-8501 (JP)
(72) Inventor: Yagi, Tetsua, Katano City, Osaka Pref. 576-0052 (JP)
(74) Representative: Kirschner, Klaus Dieter

(56) References cited:
- EP-A- 1 179 901
- EP-A- 1 408 665
- EP-A- 1 480 401
- EP-A- 1 545 126
- WO-A-01/97478
- GB-A- 2 326 070
- US-A- 5 717 722
- US-A1- 2002 034 214
- US-A1- 2002 106 036
- US-B1- 6 330 293

## Description

The present invention relates to a receiving apparatus for digital broadcasting using an orthogonal frequency division multiplexing (hereinafter, simply referred to as OFDM) scheme.

Terrestrial digital TV broadcasting and terrestrial digital audio broadcasting in Japan, though different in bandwidth, have substantially the same transmission system. Unless otherwise specified, these two transmission systems are hereinafter collectively referred to as a terrestrial digital broadcasting transmission system. The terrestrial digital broadcasting system in Japan is called ISDB-T (Integrated Services Digital Broadcasting for Terrestrial) and OFDM is used as a modulation scheme. The OFDM is a multicarrier modulation scheme using a plurality of carriers. The ISDB-T signal format is configured of OFDM segments of 6/14 MHz in bandwidth. The terrestrial digital TV broadcasting transmission system uses 13 OFDM segments. The terrestrial digital audio broadcasting transmission system, on the other hand, uses one or three OFDM segments.

Also in ISDB-T, the hierarchical transmission with a maximum of three hierarchies can be carried out by changing the combinations of the carrier modulation schemes and the convolution coding ratio. Each hierarchical level is configured of a plurality of segments. The carrier modulation scheme includes DQPSK (Differential Quaternary Phase Shift Keying) making up a differential modulation, QPSK (Quaternary Phase Shift Keying), 16QAM (Quadrature Amplitude Modulation) and 64QAM making up a coherent modulation.

ISDB-T has three types of mode according to the difference in the number of carriers. The number of carriers per OFDM segment is 108 for mode 1, 216 for mode 2 and 432 for mode 3. The carrier spacings are (250/63) kHz, (125/63) kHz and (125/126) kHz, respectively. The effective symbol duration is the reciprocate of the carrier spacing, and 252 µs, 504 µs and 1008 µs, respectively. The effective symbol is accompanied by a guard interval constituting the time for relaxing interference. The effective symbol combined with the guard interval is called a symbol. The guard interval length is of four types including 1/4, 1/8, 1/16 and 1/32 of the effective symbol length. One frame has 204 symbols. Assuming that the guard interval length is 1/4 of one frame, therefore, the length of one frame is 64.26 µs for mode 1, 128.52 µs for mode 2 and 257.04 µs for mode 3. The details are described, for example, in "Transmission System for Digital Terrestrial TV Broadcasting" by Association of Radio Industries and Businesses, ARIB STD-B31 1.2 Edition (planned January 24, 2002).

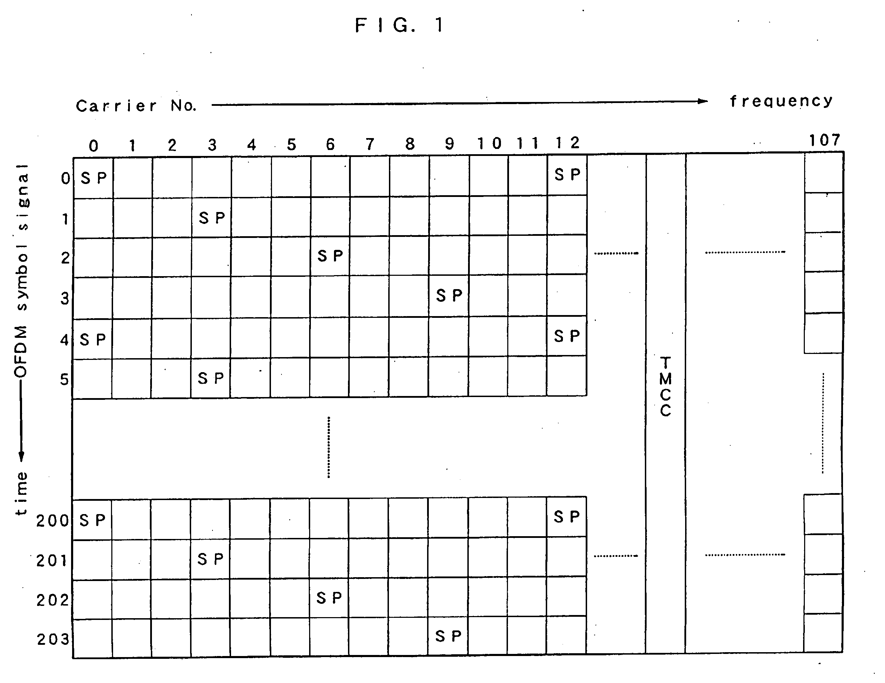

Fig. 1 is a diagram for explaining the structure of the OFDM segment for coherent modulation in mode 1 for the terrestrial digital broadcasting system. The OFDM segment has a pilot signal called a SP (Scattered Pilot) signal. As shown in Fig. 1, the SP signal is inserted once per 12 carriers in the frequency direction and once per 4 symbols in the symbol direction. The SP signal is used to estimate the transmission path characteristic for equalizing a waveform in a receiver. The SP signal is inserted in the OFDM segment for coherent modulation of the data signal.

Also, the OFDM segment has a carrier signal called a TMCC (Transmission and Multiplexing Configuration Control) signal to transmit the control information. In the OFDM segment structure of the coherent modulation, the number of carriers of the TMCC signal is one for mode 1, two for mode 2 and four for mode 3. In the OFDM segment structure of a differential modulation, on the other hand, the number of carriers of the TMCC signal is five for mode 1, 10 for mode 2 and 20 for mode 3.

The TMCC signal is transmitted at the rate of one bit per symbol. The control information is inserted in one frame, i.e., a block including 204 bits. In the case where the TMCC signal is inserted in a plurality of carriers in the segment, the same contents are transmitted with a plurality of carriers. The TMCC signal transmits the control information by DBPSK (Differential Binary Phase Shift Keying) modulation between symbols. In the TMCC signal, a first bit B0 constitutes a reference for differential demodulation, and 16 bits B1 to B16 constitute the synchronization word. Three bits B 17 to B 19 make up the segment descriptor, and 102 bits B20 to B 121 the TMCC information. Further, 82 bits B 122 to B203 constitute parity bits for error correction.

The synchronization word is of two types including w0 = 0011010111101110 and bit-inverted w1 = 1100101000010001. The signals w0 and w1 are sent out in alternate frames. The segment descriptor is a signal for identifying whether a particular segment is a differential modulation or a coherent modulation. In the case of the differential modulation, "111" is assigned, while in the case of the coherent modulation, "000" is assigned. The parity bits are obtained by the error correction coding of the TMCC information B20 to B121 with the shortened code (184, 102) of the difference-set cyclic code (273, 191).

The TMCC information is configured of a number of pieces of control data as described later. The assignment of the TMCC information to each control data is explained. The two bits B20 to B21 represent a system ID. The four bits B22 to B25 are an index for transmission parameter change. The bit B26 is an activation flag for alert broadcasting. The 40 bits B27 to B66 are the current information for describing the present hierarchical structure and the transmission parameter. The 40 bits B67 to B 106 are the next information for describing the transmission parameter and the hierarchical structure after switching. The three bits B107 to B 109 represent the amount of phase correction in connected transmission. The 12 bits B 110 to B121 are the reserved bits. The reserved bits are all stuffed with "1".

As a system ID, "00" is assigned to the terrestrial digital TV broadcast system, "01" is assigned to the terrestrial digital audio broadcast system and the remaining value is reserved. The index for transmission parameter change is used to notify the switching of the transmission parameter and the timing to the receiver. The index for transmission parameter change normally assumes the value "1111". In switching the transmission parameter, however, the value is decremented one for each frame from the 15th frame in advance of switching. After "0000", the value is returned to "1111". The timing at which the transmission parameter is switched is synchronized with the frame following the sending of "0000".

The activation flag for alert broadcasting assumes "1" during the start control operation of the receiver, and "0" otherwise. The amount of phase correction in connected transmission is used to correct the phase of the lowest carrier of an upper adjacent segment for each symbol in the case where the received segment uses the particular carrier as a reference signal in the terrestrial digital audio broadcasting system. The value is "000" for the phase correction amount of - pi /4 and incremented by one with each increase of - pi/4 in the phase correction amount. In the case where no phase correction is involved such as when the terrestrial digital TV broadcasting or the connected transmission is not used, the amount of phase correction in connected transmission is "111".

The assignment of the current information is explained. Reference character B27 designates a partial reception flag or a format ID flag. Thirteen bits B28 to B40 represent the transmission parameter information for hierarchical layer A, 13 bits B41 to B53 the transmission parameter information for hierarchical layer B, and 13 bits B54 to B66 the transmission parameter information for hierarchical layer C.

The assignment of the next information is explained. Reference numeral B67 designates a partial reception flag or a format ID flag. Thirteen bits B68 to B80 represent the transmission parameter information for hierarchical layer A, 13 bits B81 to B93 the transmission parameter information for hierarchical layer B, and 13 bits B94 to B 106 the transmission parameter information for hierarchical layer C.

The assignment of the transmission parameter information for each hierarchical layer of the current information and the next information are specifically explained. Three bits B28 to B30, B41 to B43, B54 to B56, B68 to B70, B81 to B83 and B94 to B96 each represent the carrier modulation scheme. Three bits B31 to B33, B44 to B46, B57 to B59, B71 to B73, B84 to B86 and B97 to B99 each represent the convolution coding ratio. Three bits B34 to B36, B47 to B49, B60 to B62, B74 to B76, B87 to B89 and B100 to B102 each represent the interleave length. Four bits B37 to B40, B50 to B53, B63 to B66, B77 to B80, B90 to B93 and B103 to B106 each represent the number of segments.

The bits B27 and B67 are called the partial receiving flag in the terrestrial digital TV broadcast system. These bits assume the value "1" when the partial receiving is involved, and "0" otherwise. The bits B27 and B67 are called the format ID flag in the terrestrial digital audio broadcast system. These bits assume the value "0" for one-segment format, and "1" for the three-segment format. The value is "1" in the absence of the next information. In the three-segment format in the terrestrial digital audio broadcast system, the partial receiving is essential. In the description that follows, these bits are called the partial receiving flag regardless of the system type.

As for the carrier modulation scheme, DQPK is set to "000", QPSK to "001", 16QAM to "010" and 64QAM to "011". In the absence of the hierarchical layer or the next information not used, "111" is employed, while the remaining values are reserved. As for the convolution coding ratio, 1/2 is expressed as "000", 2/3 as "001", 3/4 as "010", 5/6 as "011", and 7/8 as "100". In the absence of the hierarchical level or the next information not used, "111" is employed, while the remaining values are reserved.

As to the interleave length, the value of the parameter I of the time interleave for mode 3 is expressed as "000" for I = 0, "001" for I = 1, "010" for I = 2, "011" for I = 4, and "100" for I = 8. In the absence of the hierarchical level or the next information not used, "111" is employed while the remaining values are reserved.

In the terrestrial digital TV broadcast system, the parameter of the time interleave length I = 8 is not existent, and therefore "100" is also reserved. As to the number of segments, one segment is expressed as "0001", and the value is increased one each with the increase in the number of segments. In the terrestrial digital TV broadcast system, the number of segments increases up to the maximum of 13, i.e., "1101", while in the terrestrial digital audio broadcast system, the number of segments increases up to the maximum of 2, i.e., "0010". The remaining values including "0000" are reserved.

In order to establish the frame synchronization in the receiving apparatus, the synchronization word is required to be detected. The frame synchronization is assumed to have been established simply by detecting w0 or w1 providing a synchronization word pattern. In the case where the same pattern as w0 or w1 is transmitted in the TMCC information or the parity bit, the particular pattern may be erroneously detected as a synchronization word. This is called the frame sync detection error. In view of this, the establishment of frame synchronization is regarded after the synchronization word is detected twice and the alternate transmission of the patterns w0 and w1 is confirmed. In this way, the frame sync detection error can be avoided.

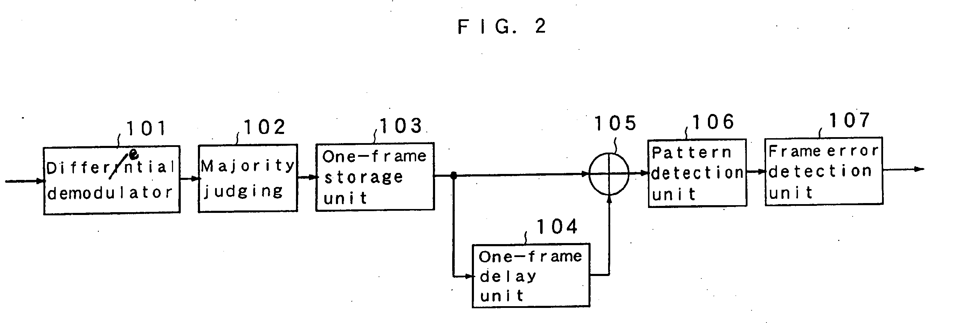

Fig. 2 shows a configuration of the conventional frame synchronization detection circuit. In a differential demodulator 101, the value of each bit in the TMCC carrier modulated by DBPSK scheme is compared with the value of the immediately preceding bit, regardless of the value of the differential reference bit of the TMCC carrier. In the case where the bit undergoes no change, "0" is output, while in the case where the bit undergoes a change, "1" is output. This scheme is called the differential demodulation. In a majority judging part 102, assuming that a plurality of the TMCC carriers of all the TMCC carriers obtained from the differential demodulator 101 are required to store the same data, the value of the bits corresponding to the plurality of the TMCC carriers which appear most frequently is determined thereby to generate a majority TMCC signal.

A one-frame storage unit 103 stores one frame of TMCC signal obtained from the majority judging part 102. A one-frame delay unit 104 delays one frame of TMCC signal in the one-frame storage unit 103. An exclusive OR arithmetic unit 105 calculates the exclusive OR between the TMCC signal obtained from the one-frame storage unit 103 and the TMCC signal obtained from the one-frame delay unit 104. A pattern detection unit 106 detects the position of the synchronization word included in the TMCC signal from the result of calculation of the exclusive OR arithmetic unit 105. A frame error detection unit 107 outputs the deviation of the number of symbols from the head of the frame to the head of the synchronization word as a frame error based on the detection result output from the pattern detection unit 106. The frame synchronization detection circuit having this configuration is disclosed in Japanese Unexamined Patent Publication No. 2002-217883.

In the conventional frame synchronization detecting method, however, it is inevitable to detect the synchronization word twice to avoid the frame sync detection error. In this case, the time required from the receiving of the signal to the establishment of the frame synchronization is 1.5 frames on the average or two frames in maximum. The time length of 1.5 frames is equivalent to about 100 ms for mode 1, about 190 ms for mode 2 and about 390 ms for mode 3. The time length of two frames, on the other hand, is about 130 ms for mode 1, about 260 ms for mode 2 and about 510 ms for mode 3.

In watching the terrestrial digital broadcasting, the frame synchronization is required to be established each time the channel is switched. Therefore, the establishment of the frame synchronization has a great effect on the time length required from the channel switching operation to the provision of the service, i.e., the display of an image on the screen or an audio output.

In the US 2002/34214 A1, when broadcasting signals through a plurality of information channels with an OFDM system, the plurality of information channels are multiplexed in the sense of frequency and collectively subjected to IFFT modulation for connected transmission instead of subjecting the plurality of information channels independently to OFDM modulation for transmission. With this arrangement, the efficiency of exploitation of frequencies is improved. The OFDM frames are synchronized for each information channel for the purpose of connected transmission. Then, the OFDM receiver can switch the information channel for signal reception, maintaining the frame synchronizing signals.

According to EP-A1 179 901, an OFDM receiver includes an offset compensator compensating for a frequency offset in a received OFDM signal. The offset compensator includes a memory storing two reference signals corresponding to arbitrary portions in the start symbol of the OFDM signal. A cross correlation value between the received OFDM signal and each of the two reference signals is calculated by a cross correlator. Each peak position is detected by a peak detector. A frequency offset estimate value of the received OFDM signal is estimated by a frequency offset estimation circuit based on the cross correlation value at each detected peak position. A phase rotation circuit compensates for the frequency offset of the received OFDM signal based on the estimated frequency offset estimate value.

When a signal modulated by a multi-subcarrier modulation scheme is to be demodulated according to US-A-5,717,722, an amplitude detection unit sequentially detects the amplitudes of a subcarrier-synthesized signal to accurately set a symbol discrimination timing for the modulated signal within a short period of time. A reference amplitude storage unit stores a reference amplitude at a portion corresponding to a predetermined reference symbol portion included in the received signal. A correlation calculation unit sequentially calculates correlation values between amplitudes sequentially detected by the amplitude detection unit and the reference amplitude. A discrimination timing determination unit determines a symbol discrimination timing on the basis of time representing a maximum value of the correlation values sequentially calculated by the correlation calculation unit.; When the signal modulated by the multi-subcarrier modulation scheme is to be demodulated, a phase detection unit detects a phase theta of the subcarrier-synthesized signal at a predetermined portion to easily and properly correct the frequency offset of a carrier frequency

In US-B1-6,330,293, a coarse symbol synchronization is carried out during reception, for tuning, the signal being correlated in the time domain with various copies of itself which are shifted in time and correspond to the possible transmission modes. The present mode, the present guard interval and a sampling window are derived from this.

The WO 01/97478 A shows methods and apparatus suitable for use in obtaining frame synchronization in an Orthogonal Frequency Division Multiplexing (OFDM) communication system are described. The OFDM communication system includes a plurality of base units which simultaneously transmit a plurality of pilot tones in a predetermined pilot tone pattern during one or more time slots of a plurality of time slots defining a message slot. The method includes the steps of receiving OFDM signals within a time slot; determining a signal level in the OFDM signals at each frequency of a plurality of pilot tone frequencies; performing a correlation between the signal levels and the predetermined pilot tone pattern; generating and storing a pattern detection value based on performing the correlation; and repeating the receiving, determining, performing, generating and storing for each time slot of the plurality of time slots.

An object of this invention is to provide a receiving apparatus in which the frame synchronization is established quickly without detecting the sync signal twice thereby to shorten the time required for establishment of the frame synchronization, a main factor contributing to the delay time in the channel switching operation.

This object is achieved by a receiving apparatus according to claim 1.

An error corrector corrects the decoding error of the demodulated signal obtained in the demodulator. The data decoder decodes the digital data obtained in the error corrector and outputs at least one of a video signal and an audio signal. In the process, the frame synchronization detector detects the deviation of the carrier signal output from the FFT within the range of the head position of a frame to the head position of a provisional symbol, and supplies a deviation-corrected symbol number to the demodulator and the error corrector as a normal symbol number. The control information detector extracts the control information from the carrier signal and, based on the normal symbol number obtained from the frame synchronization detector, decodes by correcting the error of the control information. The error-corrected control information is supplied to the demodulator and the error corrector. In this way, the receiving apparatus establishes the frame synchronization at early time and demodulates broadcast/communication data from the OFDM signal with control information including a plurality of pieces of control data inserted therein.

Also, in the frame synchronization detector according to this invention, the control information extraction unit extracts the control information from the carrier signal. The control information storage unit stores one frame of the control information obtained from the control information extraction unit. On the other hand, the symbol number generation unit outputs a provisional symbol number indicating the order in which the provisional signals of the control information are arranged. A reliability calculation unit calculates the reliability of each control data corresponding to the provisional symbol number output from the symbol number generation unit with reference to the control information stored in the control information storage unit. A maximum value detection unit compares a plurality of reliabilities by provisional symbol number calculated in the reliability calculation unit and establishes and outputs the provisional symbol number at the time when the maximum reliability is calculated, as a normal symbol number. With this configuration, the time can be shortened to establish the frame synchronization which is a main factor contributing to the delay time in the channel switching operation.

Further advantageous embodiments of the invention are characterized in the dependent

Advantageous embodiments of the invention are now described with reference to the drawings in which:
Fig. 1 is a diagram showing an OFDM segment structure of a synchronous modulator in mode 1 of a terrestrial digital broadcast system;
Fig. 2 is a block diagram showing the configuration of a conventional frame synchronization detector;
Fig. 3 is a block diagram showing the general configuration of an OFDM receiving apparatus according to a first embodiment of the invention;
Fig. 4 is a block diagram showing the configuration of a frame synchronization detector according to the first embodiment of the invention;
Fig. 5 is a block diagram showing an example of the configuration of a control information extraction unit in the frame synchronization detector according to the first embodiment of the invention;
Fig. 6 is a block diagram showing another example of the configuration of the control information extraction unit in the frame synchronization detector according to the first embodiment of the invention;
Fig. 7 is a block diagram showing the configuration of a reliability calculation unit in the frame synchronization detector according to the first embodiment of the invention;
Fig. 8 is a block diagram showing the configuration of a data extracting part in the frame synchronization detector according to the first embodiment of the invention;
Fig. 9 is a block diagram showing a part of the configuration of a reliability judging part in the frame synchronization detector according to the first embodiment of the invention;
Fig. 10 is a block diagram showing the remaining part of the configuration of the reliability judging part in the frame synchronization detector according to the first embodiment of the invention;
Fig. 11 is a block diagram showing the configuration of a frame synchronization detector according to a second embodiment of the invention;
Fig. 12 is a block diagram showing the configuration of a pilot period detection unit in the frame synchronization detector according to the second embodiment of the invention;
Fig. 13 is a block diagram showing the configuration of a frame synchronization detector according to a third embodiment of the invention;
Fig. 14 is a block diagram showing the configuration of a frame synchronization detector according to a fourth embodiment of the invention.

### (First Embodiment)

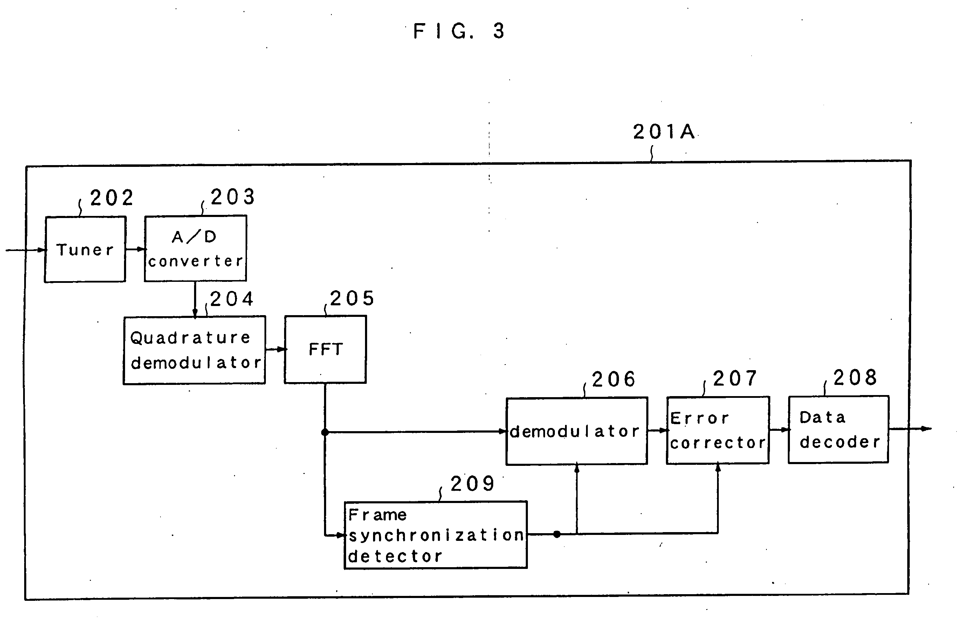

First, a receiving apparatus according to an embodiment of the invention is explained in detail with reference to the accompanying drawings. Fig. 3 is a diagram showing the general configuration of an OFDM receiving apparatus. The OFDM receiving apparatus 201A comprises a tuner 202, an A/D converter 203, a quadrature demodulator 204, a FFT 205, a demodulator 206, an error corrector 207, a data decoder 208 and a frame synchronization detector 209.

An orthogonal frequency division multiplexed signal (hereinafter, referred to as an OFDM signal or an OFDM transmission signal) is applied to the OFDM receiving apparatus 201A through a receiving antenna or a cable (not shown). This signal is selected by the tuner 202 and is converted to a digital signal by the A/D converter 203. The quadrature demodulator 204 demodulates the input digital signal and converts it into a baseband OFDM signal. The FFT 205 subjects the signal from the quadrature demodulator 204 to the fast Fourier transform. In this way, the time-domain signal is converted to the frequency-domain signal, and a plurality of carrier signals are output.

The demodulator 206 outputs a demodulated signal by coherent demodulator or differential demodulator of the signal from the FFT 205. The error corrector 207 corrects the error of the demodulated signal obtained from the demodulator 206. The data decoder 208 visually and/or aurally decodes the digital data obtained from the error corrector 207 and outputs a video signal and/or an audio signal. The video signal and the audio signal decoded in the data decoder 208 is output to a display or a loudspeaker provided inside or outside the OFDM receiving apparatus 201A.

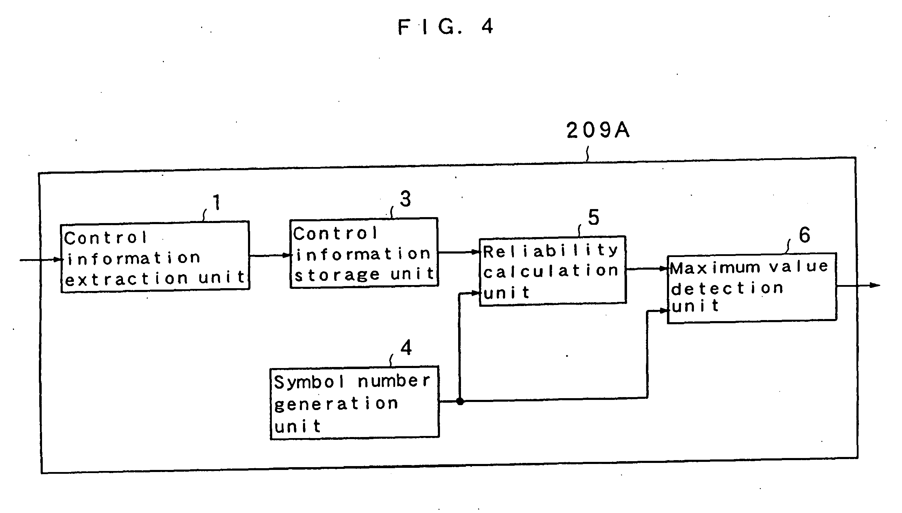

The frame synchronization detector 209 in the receiving apparatus according to the first embodiment makes up the frame synchronization detector 209A having the configuration shown in Fig. 4. The frame synchronization detector 209A includes a control information extraction unit 1, a control information storage unit 3, a symbol number generation unit 4, a reliability calculation unit 5 and a maximum value detection unit 6. The frame synchronization detector 209A detects the deviation in the range of the frame head to the symbol head of the symbol-based signal output from the FFT 205, and supplies a deviation-corrected symbol number as a normal symbol number to the demodulator 206 and the error corrector 207.

The control information extraction unit 1 in the frame synchronization detector 209A extracts the control information from the carrier signal output from the FFT 205. The Japanese terrestrial digital broadcast system is explained as an example, in which the TMCC signal is used for the control information.

The control information storage unit 3 stores one frame of the TMCC signal obtained from the control information extraction unit 1. Therefore, symbol numbers 1 to 203 are stored in the control information storage unit 3. In this stage, however, the frame synchronization has not yet to be established, and therefore, the head data stored in the control information storage unit 3 is not necessarily the symbol number 0. The data may be stored with the symbol numbers m, m+1, ..., 203, 0, 1, ..., m-1 in that order.

At the time when the data of 204 symbols are stored in the control information storage unit 3, the symbol number generation unit 4 generates 204 provisional symbol numbers quickly within the time Ts of one normal symbol. As shown in Fig. 1, as long as the synchronization is established, the normal symbol numbers 0, 1, 2, ..., m, m+1, ..., 202, 203 exist at specified timing. Unless the synchronization is established, however, the timing associated with the symbol number 0 is unknown. Thus, the symbol number generation unit 4 generates provisional symbol numbers #0, #1, #2, ..., #n, #n+1, ..., #202, #203 from an arbitrary position (timing) within a time Ts. These numbers # represent an order in which the provisional signals of the control information are arranged. The control information extraction unit 1 extracts the TMCC signal at the rate of one bit per symbol. One frame is composed of 204 symbols. The symbol number generation unit 4 sequentially generates the provisional symbol numbers 0 to 203 at a high rate. As an alternative, a part of the provisional symbol numbers such as 0 to 102 are generated at a high rate sequentially among the provisional symbol numbers 0 to 203.

The reliability calculation unit 5, with reference to the TMCC signal stored in the control information storage unit 3, calculates the reliability corresponding to the provisional symbol number output from the symbol number generation unit 4. This operation is specifically explained. Assume that a given control data A is configured of "a" bits and inserted as "a" bits from the normal symbol number m. The reliability calculation unit 5 extracts "a" bits following the number m from the provisional symbol #0, and collates them with the normal control data which should be located at these bit positions. Next, "a" bits following the number m from the provisional symbol # 1 are extracted and collated with the bits of the normal control data A. This collating operation is performed for the provisional symbol numbers ..., #n, #n+1, ... sequentially moved down from the provisional symbol #0. In the case where the collation shows the coincidence, a positive numerical value R is output as the reliability of the control data A. The value of the provisional symbol number #n associated with the reliability R is stored. This collating operation is performed also for other control data. The reliabilities for the same control data are obtained in the same number (204) as the provisional symbol numbers. The values of the reliabilities of the control data obtained from the values # of the provisional symbol numbers are added and the sum is stored.

The maximum value detection unit 6 compares the sums of a plurality of reliabilities calculated in the reliability calculation unit 5, i.e., the sums of the reliabilities in terms of the provisional symbol numbers moved down or moved up sequentially. Thus, a specific provisional symbol number for which the maximum value is obtained is selected and output. In the moving down the provisional symbols, the provisional symbols exceeding 203 in number are moved down sequentially from 0. The normal symbol numbers are determined from the provisional symbol numbers determined in this way.

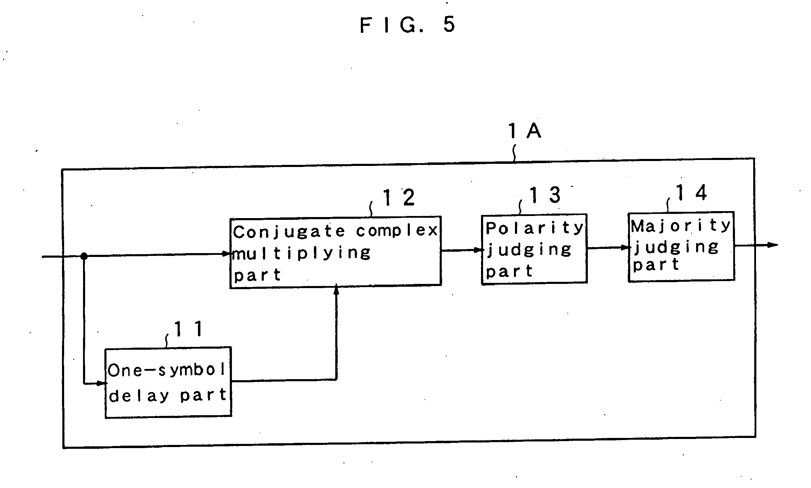

A block diagram of a control information extraction unit 1A providing an example of the control information extraction unit 1 is shown in Fig. 5. A one-symbol delay part 11 delays a DBPSK-modulated TMCC carrier by one symbol period. A conjugate complex multiplying part 12 conducts the complex conjugate multiplication between the TMCC carrier not delayed and the TMCC carrier delayed by one symbol period in the one-symbol delay part 11. A polarity judging part 13 judges the polarity of the signal output from the conjugate complex multiplying part 12 and outputs 0 or 1.

In the case where there are a plurality of sets of the TMCC carriers to store the data of the same contents, a majority judging part 14 judges, by majority decision, which of the value 0 or 1 output from the polarity judging part 13 appears more frequently in the plurality of sets of the TMCC carriers, and outputs the result of judgment as a TMCC signal.

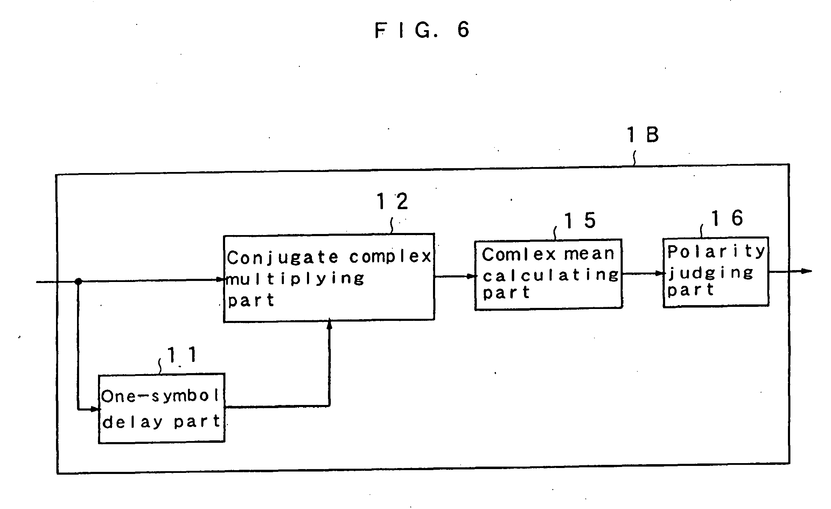

A control information extraction unit 1B shown in Fig. 6 may be used as another example of the control information extraction unit 1. The one-symbol delay part 11 delays the DBPSK-modulated TMCC carrier by one symbol period. The conjugate complex multiplying part 12 conducts the complex conjugate multiplication between the TMCC carrier not delayed and the TMCC carrier one symbol period delayed by the one-symbol delay part 11. In the case where there are a plurality of sets of TMCC carriers to store the data of the same contents, the complex mean calculating part 15 calculates a complex mean of the signals output from the conjugate complex multiplying part 12. The polarity judging part 16 judges the polarity of the complex mean signal calculated by the complex mean calculating unit 15 and outputs the judgment as a TMCC signal. In all the configurations described above, the conjugate complex multiplying part 12 may be configured to conduct the complex division using the TMCC carrier one symbol period delayed by the one-symbol delay part 11.

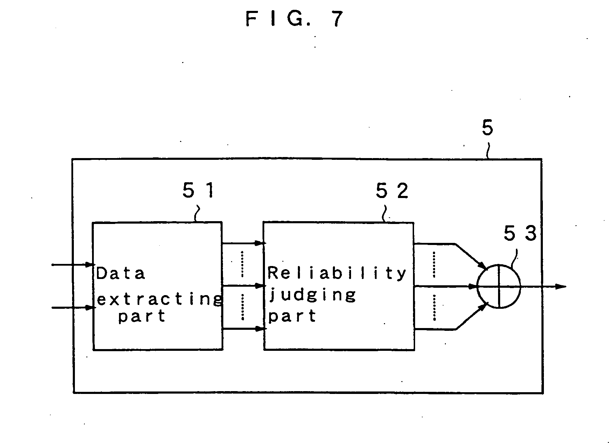

A block diagram of the reliability calculation unit 5 is shown in Fig. 7. The data extracting part 51, based on the provisional symbol number output from the symbol number generation unit 4 shown in Fig. 4, extracts at least one control data located at a specified bit position from the TMCC signal stored in the control information storage unit 3. The reliability judging part 52 judges the reliability of at least one control data extracted by the data extracting part 51 and outputs the reliability numerically. An adder 53 adds the value of at least one reliability output from the reliability judging part 52. With this configuration, the reliability corresponding to the provisional symbol number output from the symbol number generation unit 4 is calculated.

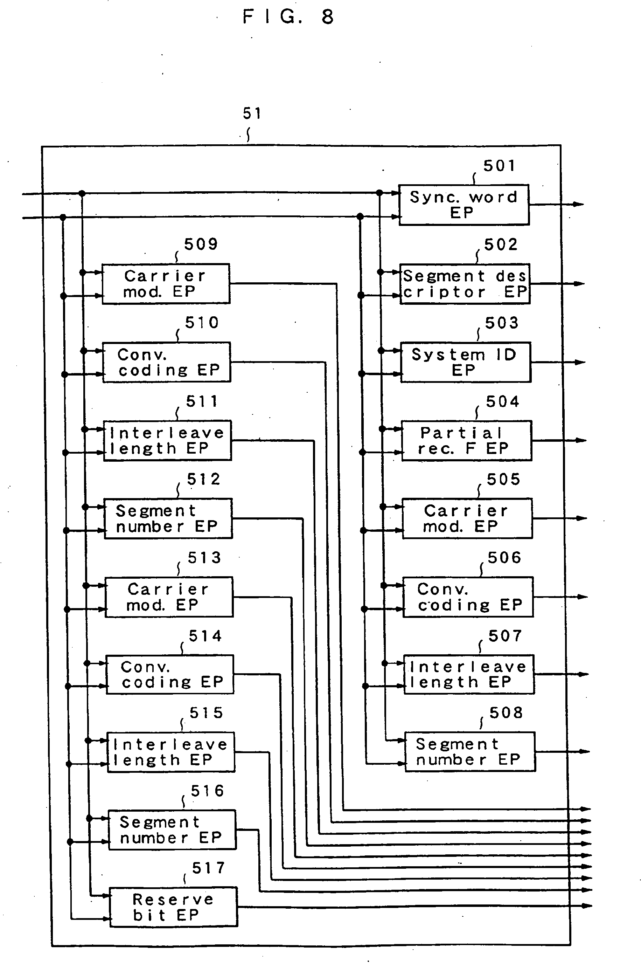

A block diagram of the data extracting part (EP) 51 is shown in Fig. 8. A synchronization word extracting portion 501 extracts a 16-bit synchronization word located at bit positions B 1 to B16 from the TMCC signal stored in the control information storage unit 3 based on the provisional symbol number output from the symbol number generation unit 4.

A segment descriptor extracting portion 502 extracts a 3-bit segment descriptor located at bit positions B17 to B19 from the TMCC signal stored in the control information storage unit 3 based on the provisional symbol number output from the symbol number generation unit 4.

A system ID extracting portion 503 extracts a 2-bit system ID located at bit positions B20 to B21 from the TMCC signal stored in the control information storage unit 3 based on the provisional symbol number output from the symbol number generation unit 4.

A partial reception flag extracting portion 504 extracts a partial reception flag of the 1-bit current information located at bit position B27 from the TMCC signal stored in the control information storage unit 3 based on the provisional symbol number output from the symbol number generation unit 4.

A carrier modulation scheme extracting portion 505 extracts a carrier modulation scheme of hierarchical layer A in the 3-bit current information located at bit positions B28 to B30 from the TMCC signal stored in the control information storage unit 3 based on the provisional symbol number output from the symbol number generation unit 4.

A convolution coding ratio extracting portion 506 extracts the convolution coding ratio of hierarchical layer A in the 3-bit current information located at bit positions B31 to B33 from the TMCC signal stored in the control information storage unit 3 based on the provisional symbol number output from the symbol number generation unit 4.

An interleave length extracting portion 507 extracts the interleave length of hierarchical layer A in the 3-bit current information located at bit positions B34 to B36 from the TMCC signal stored in the control information storage unit 3 based on the provisional symbol number output from the symbol number generation unit 4.

A segment number extracting portion 508 extracts the number of segments of hierarchical layer A in the 4-bit current information located at bit positions B37 to B40 from the TMCC signal stored in the control information storage unit 3 based on the provisional symbol number output from the symbol number generation unit 4.

A carrier modulation scheme extracting portion 509 extracts the carrier modulation scheme of hierarchical layer B in the 3-bit current information located at bit positions B41 to B43 from the TMCC signal stored in the control information storage unit 3 based on the provisional symbol number output from the symbol number generation unit 4.

A convolution coding ratio extracting portion 510 extracts the convolution coding ratio of hierarchical layer B in the 3-bit current information located at bit positions B44 to B46 from the TMCC signal stored in the control information storage unit 3 based on the provisional symbol number output from the symbol number generation unit 4.

An interleave length extracting portion 511 extracts the interleave length of hierarchical layer B in the 3-bit current information located at bit positions B47 to B49 from the TMCC signal stored in the control information storage unit 3 based on the provisional symbol number output from the symbol number generation unit 4.

A segment number extracting portion 512 extracts the number of segments of hierarchical layer B in the 4-bit current information located at bit positions B50 to B53 from the TMCC signal stored in the control information storage unit 3 based on the provisional symbol number output from the symbol number generation unit 4.

A carrier modulation scheme extracting portion 513 extracts the carrier modulation scheme of hierarchical layer C in the 3-bit current information located at bit positions B54 to B56 from the TMCC signal stored in the control information storage unit 3 based on the provisional symbol number output from the symbol number generation unit 4.

A convolution coding ratio extracting portion 514 extracts the convolution coding ratio of hierarchical layer C in the 3-bit current information located at bit positions B57 to B59 from the TMCC signal stored in the control information storage unit 3 based on the provisional symbol number output from the symbol number generation unit 4.

An interleave length extracting portion 515 extracts the interleave length of hierarchical layer C in the 3-bit current information located at bit positions B60 to B62 from the TMCC signal stored in the control information storage unit 3 based on the provisional symbol number output from the symbol number generation unit 4.

A segment number extracting portion 516 extracts the number of segments of hierarchical layer C in the 4-bit current information located at bit positions B63 to B66 from the TMCC signal stored in the control information storage unit 3 based on the provisional symbol number output from the symbol number generation unit 4.

A reserve bit extracting portion 517 extracts the 12 reserve bits located at bit positions B 110 to B121 from the TMCC signal stored in the control information storage unit 3 based on the provisional symbol number output from the symbol number generation unit 4.

In the description that follows, the aforementioned extracting portions ranging from the synchronization word extracting portion 501 to the reserve bit extracting portion 517 are referred to simply as the extracting portions 501 to 517, respectively.

The data extracting part 51 may be configured to have a part of the 17 blocks including the extracting portions 501 to 517. In other than the configuration having the 17 blocks including the extracting portions 501 to 517, the data extracting part 51 may be configured to have blocks to extract the data at specified bit positions from the TMCC signal stored in the control information storage unit 3 based on the provisional symbol number output from the symbol number generation unit 4. As an example, an amount of phase correction in connected transmission extraction unit may extract a 3-bit amount of phase correction in connected transmission located at bit positions B107 to B109 from the TMCC signal stored in the control information storage unit 3 based on the provisional symbol number output from the symbol number generation unit 4. In the case where the time from starting the frame synchronization process is less than one frame and the amount of the TMCC signal stored in the control information storage unit 3 is less than one frame (204 bits), each block of the extracting portions 501 to 517 making up the data extracting part 51 may output a signal indicating that the data cannot be extracted.

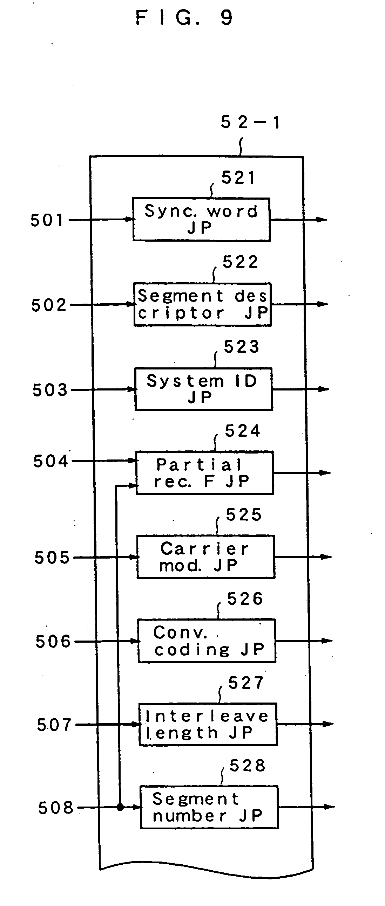

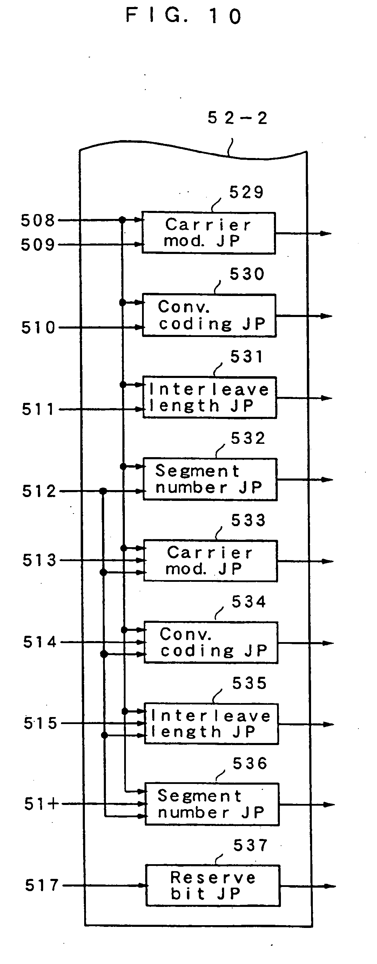

The configuration of the reliability judging part 52 is shown divided into Figs. 9 and 10. The configuration of a reliability judging part 52-1 making up a part of the reliability judging part 52 is shown in Fig. 9, and the configuration of the reliability judging part 52-2 making up the remainder of the reliability judging part 52 is shown in Fig. 10. In the explanation that follows, the component blocks of the reliability judging part 52, except for the component blocks first explained, are referred to simply as the "judging portion XY" (XY: block number) but not in full name.

A synchronization word judging portion (JP) 521 compares the synchronization word extracted by the extracting portion 501 with the pattern w0 = 0011010111101110 and the pattern w1 = 1100101000010001, and in the case where the synchronization word is in complete coincidence with one of the patterns, outputs a predetermined numerical value N010, or otherwise a predetermined numerical value N011 smaller than N010 as a reliability. Alternatively, the judging portion 521 compares the synchronization word extracted by the extracting portion 501 with the patterns w0 = 0011010111101110 and w1 = 1100101000010001, and further compares the number of coincident bits in each pattern, so that in accordance with the greater number of coincident bits in one of the patterns, a predetermined numerical value is output as a reliability. The greater the number of coincident bits, the higher the numerical value output as the reliability.

In addition to the aforementioned configuration, the judging portion 521, in the case of complete coincidence between the synchronization word extracted by the extracting portion 501 and w0 or w1, stores and holds the receiving symbol timing at which the coincidence is attained and the information as to which of w0 and w1 has coincided. Next, exactly in one frame after the receiving symbol timing, the judging portion 521 judges whether the synchronization word extracted by the extracting portion 501 is inverted in bits from the synchronization word one frame before. In the case where the bits are so inverted, the judging portion 521 may output a predetermined numerical value N012 or otherwise may output a predetermined numerical value N013 smaller than N012 as a reliability. As another alternative, the sum of the reliability output in the aforementioned configuration and N012 or N013 may be output as a reliability.

The segment descriptor judging portion 522 compares the segment descriptor extracted by the extracting portion 502 with "000" and "111 ", and in the case where the segment descriptor is in complete coincidence with one of "000" and "111 ", outputs a predetermined numerical value N020 or otherwise outputs a numerical value N021 smaller than N020 as a reliability.

The system ID judging portion 523 compares the system ID extracted by the extracting portion 503 with "00" and "01", and in the case where the system ID is in complete coincidence with one of "00" and "01", outputs a predetermined numerical value N030 or otherwise outputs a numerical value N031 smaller than N030 as a reliability. In the case where the OFDM receiving apparatus according to the invention receives only one of the signals broadcast by the terrestrial digital TV broadcast system and the terrestrial digital audio broadcast system, the judging portion 523 compares the system ID extracted by the extracting portion 503 with only one of "00" and "01". In the case of complete coincidence, the judging portion 523 may output a predetermined numerical value N032 or otherwise a predetermined numerical value N033 smaller than N032 as a reliability.

The partial reception flag judging portion 524 compares the number of segments of hierarchical layer A extracted by the extracting portion 508 with "0001" in the case where the partial reception flag extracted by the extracting portion 504 is "1". In the case where the number of segments is in complete coincidence with "0001", the judging portion 524 outputs a predetermined numerical value N040 or otherwise, outputs a numerical value N041 smaller than N040 as a reliability. In the case where the partial receiving flag extracted by the extracting portion 504 is "0", on the other hand, the judging portion 524 outputs a predetermined numerical value N042 as a reliability.

The carrier modulation scheme judging portion 525 compares the carrier modulation scheme of hierarchical layer A extracted by the extracting portion 505 with "000", "001", "010" and "011", and in the case where the carrier modulation scheme is in complete coincidence with one of "000", "001", "010" and "011", outputs a predetermined numerical value N050 or otherwise a predetermined numerical value N051 smaller than N050 as a reliability.

The convolution coding ratio judging portion 526 compares the convolution coding ratio of hierarchical layer A extracted by the extracting portion 506 with "000", "001", "010", "011" and "100", and in the case where the convolution coding ratio is in complete coincidence with one of "000", "001", "010", "011" and "100", outputs a predetermined numerical value N060 or otherwise a predetermined numerical value N061 smaller than N060 as a reliability.

The interleave length judging portion 527 compares the interleave length of hierarchical layer A extracted by the extracting portion 507 with "000", "001", "010" and "011", and in the case where the interleave length is in complete coincidence with one of "000", "001", "010" and "011", outputs a predetermined numerical value N070 or otherwise a predetermined numerical value N071 smaller than N070 as a reliability.

In the case where the system ID extracted by the extracting portion 503 is "00", the judging portion 527 compares the interleave length of hierarchical layer A extracted by the extracting portion 507 with "000", "001", "010" and "011", and in the case where the interleave length is in complete coincidence with one of "000", "001", "010" and "011", outputs a predetermined numerical value N070 or otherwise a predetermined numerical value N071 smaller than N070 as a reliability. In the case where the system ID is "01", on the other hand, the judging portion 527 compares the interleave length of hierarchical layer A with "000", "001", "010", "011" and "100" and in the case where the interleave length is in complete coincidence with one of "000", "001", "010", "011" and "100", outputs a predetermined numerical value N072 or otherwise a predetermined numerical value N073 smaller than N072 as a reliability. Further, in the case where the system ID is other than "00" and "01", the judging portion 527 may output a predetermined numerical value N074 as a reliability.

The segment number judging portion 528 compares the number of segments of hierarchical layer A extracted by the extracting portion 508 with "0001", "0010", "0011", "0100", "0101", "0110", "0111", "1000", "1001 ", "1010", "1011", "1100" and "1101", and in the case where the number of segments is in complete coincidence with one of "0001", "0010", "0011", "0100", "0101", "0110", "0111", "1000", "1001", "1010", "1011", "1100" and "1101", outputs a predetermined numerical value N080 or otherwise a predetermined numerical value N081 smaller than N080 as a reliability.

In the case where the system ID extracted by the extracting portion 503 is "00", on the other hand, the judging portion 528 compares the number of segments of hierarchical layer A extracted by the extracting portion 508 with "0001", "0010", "0011", "0100", "0101", "0110", "0111", "1000", "1001", "1010", "1011", "1100" and "1101", and in the case where the number of segments is in complete coincidence with one of "0001", "0010", "0011", "0100", "0101", "0110", "0111", "1000", "1001", "1010", "1011", "1100" and "1101", outputs a predetermined numerical value N080 or otherwise a predetermined numerical value N081 smaller than N080 as a reliability. Also in the case where the system ID is "01", the judging portion 528 may compare the number of segments of hierarchical layer A with "0001", and in the case where the number of segments is in complete coincidence with "0001", may output a predetermined numerical value N082 or otherwise a predetermined numerical value N083 smaller than N082 as a reliability. In the case where the system ID is other than "00" and "01", on the other hand, a predetermined numerical value N084 may be output as a reliability.

In the case where the number of segments of hierarchical layer A extracted by the extracting portion 508 is one of "0001", "0010", "0011", "0100", "0101", "0110", "0111", "1000", "1001", "1010", "1011" and "1100", the carrier modulation scheme judging portion 529 shown in Fig. 10 compares the carrier modulation scheme of hierarchical layer B with "000", "001", "010" and "011", and in the case where the carrier modulation scheme is in complete coincidence with one of "000", "001", "010" and "011", outputs a predetermined numerical value N090 or otherwise a predetermined numerical value N091 smaller than N090 as a reliability. Also in the case where the number of segments of hierarchical layer A is "1101", the judging portion 529 compares the carrier modulation scheme of hierarchical layer B with "111", and in the case where the carrier modulation scheme of hierarchical layer B is in complete coincidence with "111", outputs a predetermined numerical value N092 or otherwise a predetermined numerical value N093 smaller than N092 as a reliability. Further, in the case where the number of segments of hierarchical level A is one of "0000", "1110" and "1111", the judging portion 529 outputs a predetermined numerical value N094 as a reliability.

Apart from the configuration described above, in the case where the system ID extracted by the extracting portion 503 is "01", the partial reception flag extracted by the extracting portion 504 is "1" and the number of segments of hierarchical layer A extracted by the extracting portion 508 is "0001", then the judging portion 529 compares the carrier modulation scheme of hierarchical layer B extracted by the extracting portion 509 with "000", "001", "010" and "011", and in the case where the carrier modulation scheme of hierarchical layer B is in complete coincidence with one of "000", "001", "010" and "011", outputs a predetermined numerical value N095 or otherwise a predetermined numerical value N096 smaller than N095 as a reliability. Further, in the case where the system ID is "01" and the partial reception flag is "0", or the system ID is "01" and the number of segments of hierarchical layer A is other than "0001", then the judging portion 529 compares the carrier modulation scheme of hierarchical layer B with "111 ", and in the case where the carrier modulation scheme of hierarchical layer B is in complete coincidence with "111", may output a predetermined numerical value N097 or otherwise a predetermined numerical value N098 smaller than N097 as a reliability.

In the case where the number of segments of hierarchical layer A extracted by the extracting portion 508 is one of "0001", "0010", "0011", "0100", "0101", "0110", "0111", "1000", "1001", "1010", "1011" and "1100", the convolution coding ratio judging portion 530 compares the convolution coding ratio of hierarchical layer B extracted by the extracting portion 510 with "000", "001 ", "010", "011" and "100", and in the case where the convolution coding ratio of hierarchical layer B is in complete coincidence with one of "000", "001", "010", "011" and "100", outputs a predetermined numerical value N100 or otherwise a predetermined numerical value N101 smaller than N100 as a reliability: Further, in the case where the number of segments of hierarchical layer A is "1101", the judging portion 530 compares the convolution coding ratio of hierarchical layer B with "111" and in the case where the convolution coding ratio of hierarchical layer B is in complete coincidence with "111", outputs a predetermined numerical value N102 or otherwise a predetermined numerical value N103 smaller than N102 as a reliability. In the case where the number of segments of hierarchical layer A is one of "0000", "1110" and "1111", the judging portion 530 outputs a predetermined numerical value N104 as a reliability.

Apart from the configuration described above, in the case where the system ID extracted by the extracting portion 503 is "01", the partial reception flag extracted by the extracting portion 504 is "1" and the number of segments of hierarchical layer A extracted by the extracting portion 508 is "0001", then the judging portion 530 compares the convolution coding ratio of hierarchical layer B extracted by the extracting portion 510 with "000", "001", "010", "011" and "100", and in the case where the convolution coding ratio of hierarchical layer B is in complete coincidence with one of "000", "001", "010", "011" and "100", outputs a predetermined numerical value N105 or otherwise a predetermined numerical value N106 smaller than N105 as a reliability. Also, in the case where the system ID is "01" and the partial reception flag is "0" or the system ID is "01" and the number of segments of hierarchical layer A is other than "0001", then the judging portion 530 compares the convolution coding ratio of hierarchical layer B with "111" and in the case where the convolution coding ratio of hierarchical layer B is in complete coincidence with "111", may output a predetermined numerical value N107 or otherwise a predetermined numerical value N108 smaller than N107 as a reliability.

In the case where the number of segments of hierarchical layer A extracted by the extracting portion 508 is one of "0001", "0010", "0011", "0100", "0101", "0110", "0111", "1000", "1001", "1010", "1011" and "1100", the interleave length judging portion 531 compares the interleave length of hierarchical layer B extracted by the extracting portion 511 with "000", "001", "010" and "011", and in the case where the interleave length of hierarchical layer B is in complete coincidence with one of "000", "001", "010" and "011", outputs a predetermined numerical value N110 or otherwise a predetermined numerical value N111 smaller than N110 as a reliability. Also in the case where the number of segments of hierarchical layer A is "1101", the judging portion 531 compares the interleave length of hierarchical layer B with "111" and in the case where the interleave length of hierarchical layer B is in complete coincidence with "111", outputs a predetermined numerical value N112 or otherwise a predetermined numerical value N113 smaller than N112 as a reliability. Further, in the case where the number of segments of hierarchical layer A is one of "0000", "1110" and "1111", the judging portion 531 outputs a predetermined numerical value N114 as a reliability.

Apart from the configuration described above, in the case where the system ID extracted by the extracting portion 503 is "01", the partial reception flag extracted by the extracting portion 504 is "1" and the number of segments of hierarchical layer A extracted by the extracting portion 508 is "0001", then the judging portion 531 compares the interleave length of hierarchical layer B extracted by the extracting portion 511 with "000", "001", "010", "011" and "100", and in the case where the interleave length is in complete coincidence with one of "000", "001", "010", "011" and "100", outputs a predetermined numerical value N115 or otherwise a predetermined numerical value N116 smaller than N115 as a reliability. Further, in the case where the system ID is "01" and the partial reception flag is "0" or the system ID is "01" and the number of segments of hierarchical layer A is other than "0001", then the judging portion 531 compares the interleave length of hierarchical layer B with "111" and in the case where the interleave length of hierarchical layer B is in complete coincidence with "111", may output a predetermined numerical value N117 or otherwise a predetermined numerical value N118 smaller than N117 as a reliability.

In the case where the number of segments of hierarchical layer A extracted by the extracting portion 508 is one of "0001", "0010", "0011", "0100", "0101", "0110", "0111", "1000", "1001", "1010", "1011" and "1100" and the number of segments of hierarchical layer B extracted by the extracting portion 512 is other than "0000", then the segment number judging portion 532 adds the number of segments of hierarchical layer A and the number of segments of hierarchical layer B to each other numerically. In the case where the result of addition is "13" or less, the judging portion 532 outputs a predetermined numerical value N120 or otherwise a predetermined numerical value N121 smaller than N121 as a reliability. Also in the case where the number of segments of hierarchical layer A is "1101", the judging portion 532 compares the number of segment of hierarchical layer B with "1111", and in the case where the number of segments of hierarchical layer B is in complete coincidence with "1111", outputs a predetermined numerical value N122 or otherwise a predetermined numerical value N123 smaller than N122 as a reliability. Further, in the case where the number of segments of hierarchical layer A is one of "0000", "1110" and "1111", the judging portion 532 outputs a predetermined numerical value N124 as a reliability.

Apart from the configuration described above, in the case where the system ID extracted by the extracting portion 503 is "01", the partial reception flag extracted by the extracting portion 504 is "1" and the number of segments of hierarchical layer A extracted by the extracting portion 508 is "0001", then the judging portion 532 compares the number of segments of hierarchical layer B extracted by the extracting portion 512 with "0010". In the case where the number of segments of hierarchical layer B is in complete coincidence with "0010", the judging portion 532 outputs a predetermined numerical value N125 or otherwise a predetermined numerical value N126 smaller than N125 as a reliability. Also in the case where the system ID is "01" and the partial reception flag is "0", or the system ID is "01" and the number of segments of hierarchical layer A is other than "0001", then the judging portion 532 compares the number of segments of hierarchical layer B with "1111" and in the case where the number of segments of hierarchical layer B is in complete coincidence with "1111", may output a predetermined numerical value N127 or otherwise a predetermined numerical value N128 smaller than N127 as a reliability.

In the case where the number of segments of hierarchical layer A extracted by the extracting portion 508 is other than both "0000", the number of segments of hierarchical layer B extracted by the extracting portion 512 is other than "0000" and the numerical sum of the number of segments of hierarchical layer A and the number of segments of hierarchical layer B is "12" or less, then the carrier modulation scheme judging portion 533 compares the carrier modulation scheme of hierarchical layer C extracted by the extracting portion 513 with "000", "001", "010" and "011". In the case where the carrier modulation scheme of hierarchical layer C is in complete coincidence with one of "000", "00 1 ", "010" and "011", the judging portion 533 outputs a predetermined numerical value N130 or otherwise a predetermined numerical value N131 smaller than N130 as a reliability. Also in the case where the number of segments of hierarchical layer A is other than "0000", the number of segments of hierarchical layer B is other than "0000" and the numerical sum of the number of segments of hierarchical layer A and the number of segments of hierarchical layer B is "13", then the judging portion 533 compares the carrier modulation scheme of hierarchical layer C with "111". In the case where the carrier modulation scheme of hierarchical layer C is in complete coincidence with "111", the judging portion 533 outputs a predetermined numerical value N132 or otherwise a predetermined numerical value N133 smaller than N132 as a reliability. Further, in the case where the number of segments of hierarchical layer A is "0000", the number of segments of hierarchical layer B is "0000" or the numerical sum of the number of segments of hierarchical layer A and the number of segments of hierarchical layer B is "14" or more, then the judging portion 533 outputs a predetermined numerical value N134 as a reliability.

Apart from the configuration described above, in the case where the system ID extracted by the extracting portion 503 is "01", the judging portion 533 compares the carrier modulation scheme of hierarchical layer C extracted by the extracting portion 513 with "111". In the case where the carrier modulation scheme of hierarchical layer C is in complete coincidence with "111", the judging portion 533 may output a predetermined numerical value N135 or otherwise a predetermined numerical value N136 smaller than N135 as a reliability.

In the case where the number of segments of hierarchical layer A extracted by the extracting portion 508 is other than "0000", the number of segments of hierarchical layer B extracted by the extracting portion 512 is other than "0000" and the numerical sum of the number of segments of hierarchical layer A and the number of segments of hierarchical layer B is "12" or less, then the convolution coding ratio judging portion 534 compares the convolution coding ratio of hierarchical layer C extracted by the extracting portion 514 with "000", "001", "010", "011" and "100". In the case where the convolution coding ratio of hierarchical layer C is in complete coincidence with one of "000", "001", "010", "011" and "100", the judging portion 534 outputs a predetermined numerical value N140 or otherwise a predetermined numerical value N141 smaller than N140 as a reliability. Also in the case where the number of segments of hierarchical layer A is other than "0000", the number of segments of hierarchical layer B is other than "0000" and the numerical sum of the number of segments of hierarchical layer A and the number of segments of hierarchical layer B is "13", then the judging portion 534 compares the convolution coding ratio of hierarchical layer C with "111 ". In the case where the convolution coding ratio of hierarchical layer C is in complete coincidence with "111", the judging portion 534 outputs a predetermined numerical value N142 or otherwise a predetermined numerical value N143 smaller than N142 as a reliability. Further, in the case where the number of segments of hierarchical layer A is "0000", the number of segments of hierarchical layer B is "0000" or the numerical sum of the number of segments of hierarchical layer A and the number of segments of hierarchical layer B is "14" or more, then the judging portion 534 outputs a predetermined numerical value N144 as a reliability.

Apart from the configuration described above, in the case where the system ID extracted by the extracting portion 503 is "01", the judging portion 534 compares the convolution coding ratio of hierarchical layer C extracted by the extracting portion 514 with "111". In the case where the convolution coding ratio of hierarchical layer C is in complete coincidence with "111", the judging portion may output a predetermined numerical value N145 or otherwise a predetermined numerical value N146 smaller than N145 as a reliability.

In the case where the number of segments of hierarchical layer A extracted by the extracting portion 508 is other than "0000", the number of segments of hierarchical layer B extracted by the extracting portion 512 is other than "0000" and the numerical sum of the number of segments of hierarchical layer A and the number of segments of hierarchical layer B is "13" or less, then the interleave length judging portion 535 compares the interleave length of hierarchical layer C extracted by the extracting portion 515 with "000", "001", "010" and "011". In the case where the interleave length of hierarchical layer C is in complete coincidence with one of "000", "00 1 ", "010" and "011", the judging portion 535 outputs a predetermined numerical value N150 or otherwise a predetermined numerical value N151 smaller than N150 as a reliability. Also, in the case where the number of segments of hierarchical layer A is other than "0000", the number of segments of hierarchical layer B is other than "0000" and the numerical sum of the number of segments of hierarchical layer A and the number of segments of hierarchical layer B is "13", then the judging portion 535 compares the interleave length of hierarchical layer C with "111". In the case where the interleave length of hierarchical layer C is in complete coincidence with "111", the judging portion 535 outputs a predetermined numerical value N152 or otherwise a predetermined numerical value N153 smaller than N152 as a reliability. Further, in the case where the number of segments of hierarchical layer A is other than "0000", the number of segments of hierarchical layer B is other than "0000" or the numerical sum of the number of segments of hierarchical layer A and the number of segments of hierarchical layer B is "14" or more, then the judging portion 535 outputs a predetermined numerical value N154 as a reliability.

Apart from the configuration described above, in the case where the system ID extracted by the extracting portion 503 is "01", the judging portion 535 compares the interleave length of hierarchical layer C extracted by the extracting portion 515 with "111", and in the case where the interleave length of hierarchical layer C is in complete coincidence with "111", may output a predetermined numerical value N155 or otherwise a numerical value N156 smaller than N155 as a reliability.

The segment number judging portion 536 judges whether the number of segments of hierarchical layer A extracted by the extracting portion 508 is other than "0000", the number of segments of hierarchical layer B extracted by the extracting portion 512 is other than "0000" and the numerical sum of the number of segments of hierarchical layer A and the number of segments of hierarchical layer B is "13" or less. In the case where the numerical sum of the number of segments of hierarchical layer A, the number of segments of hierarchical layer B and the number of segments of hierarchical layer C extracted by the extracting portion 516 coincides with "13", then the segment number judging portion 536 outputs a predetermined numerical value N160 or otherwise a predetermined numerical value N161 smaller than N160 as a reliability. Also, the judging portion 536 judges whether the number of segments of hierarchical layer A is other than "0000", the number of segments of hierarchical layer B is other than "0000" and the numerical sum of the number of segments of hierarchical layer A and the number of segments of hierarchical layer B is "13" or not. In the process, the judging portion 536 compares the number of segment of hierarchical layer C with "1111", and in the case where the number of segments of hierarchical layer C is in complete coincidence with "1111", outputs a predetermined numerical value N162 or otherwise a predetermined numerical value N163 smaller than N162 as a reliability. Further, in the case where the number of segments of hierarchical layer A is "0000", the number of segments of hierarchical layer B is "0000" or the numerical sum of the number of segments of hierarchical layer A and the number of segments of hierarchical layer B is "14" or more, then the judging portion 536 outputs a predetermined numerical value N164 as a reliability.

Apart from the configuration described above, in the case where the system ID extracted by the extracting portion 503 is "01", the judging portion 536 compares the number of segments of hierarchical layer C extracted by the extracting portion 516 with "1111". In the case where the number of segments of hierarchical layer C is in complete coincidence with "1111", the judging portion 536 may output a predetermined numerical value N165 or otherwise a predetermined numerical value N166 smaller than N165 as a reliability.

The reserved bit judging portion 537 compares the reserved bits extracted by the extracting portion 517 with "111111111111", and in the case where the reserved bits are in complete coincidence with "111111111111", outputs a predetermined numerical value N170 or otherwise a predetermined numerical value N171 smaller than N170 as a reliability. The judging portion 537 may compare the reserved bits extracted by the extracting portion 517 with "111111111111 ", and in accordance with the number of coincident bits, may output a predetermined numerical value as a reliability. In the process, the larger the assumed number of coincident bits, the larger the numerical value output as a reliability.

The reliability judging part 52 shown in Figs. 9 and 10 may be configured to include a part of 17 blocks of the judging portions 521 to 537. The judging part 52, in addition to the 17 blocks of the extracting portion 501 to 517, may be configured of blocks to judge and numerically output the reliability of the data extracted by the data extracting part 51. For example, the data extracting part 51 may have a block to judge the reliability of various transmission parameters for the next information in the case where the index for transmission parameter change is not "1111" upon extraction of the various transmission parameters of the next information and the index for transmission parameter change.

In the conventional frame synchronization detecting method described above, the synchronization word is required to be detected twice on the assumption that a signal having the same bit arrangement as the synchronization word exists at bit positions other than the sync signal. As a result, the time length of an average of 1.5 frames or a maximum of 2 frames is required to establish the frame synchronization. According to this embodiment, on the other hand, even in the case where a signal having the same bit arrangement as the synchronization word exists at bit positions other than the synchronization word, the particular bit positions are assumed to be those of the synchronization word thereby to calculate also the reliability of the TMCC signal other than the synchronization word. In the process, the TMCC signal other than the synchronization word also has bit positions different from the original bit positions, and therefore the calculated reliability is smaller than in the case where the reliability is calculated with the right bit positions. As a result, the detection error which otherwise might be caused in the presence of the same bit arrangement as the synchronization word at bit positions other than the synchronization word can be eliminated very quickly.

The conventional frame synchronization detecting method is intended for the detection of only the synchronization word. In the case where the detection process is started from the symbol immediately following the synchronization word due to the timing of starting the receiving operation, therefore, the detection time equivalent to a maximum of two frames is required. According to this embodiment, in contrast, even in the case where the detection process is started from the symbol immediately following the synchronization word, the fact that the reliability of the TMCC signal other than the synchronization word is calculated increases the reliability calculated with the right bit positions. Especially, in view of the fact that the control data intended for reliability calculation is arranged immediately following the synchronization word as a bit arrangement of the TMCC signal, the frame synchronization can be established very quickly for the symbol section corresponding to the particular TMCC signal.

As described above, according to the first embodiment of the invention, the reliability is calculated based on the synchronization word and the TMCC signal other than the synchronization word, and therefore the frame synchronization can be established quickly without detecting the synchronization word twice or without any detection error.

### (Second Embodiment)

Now, the frame synchronization detector according to the second embodiment of the invention is explained. The component elements for executing the same signal processing as in the first embodiment are designated by the same reference numerals, respectively, and not described again.

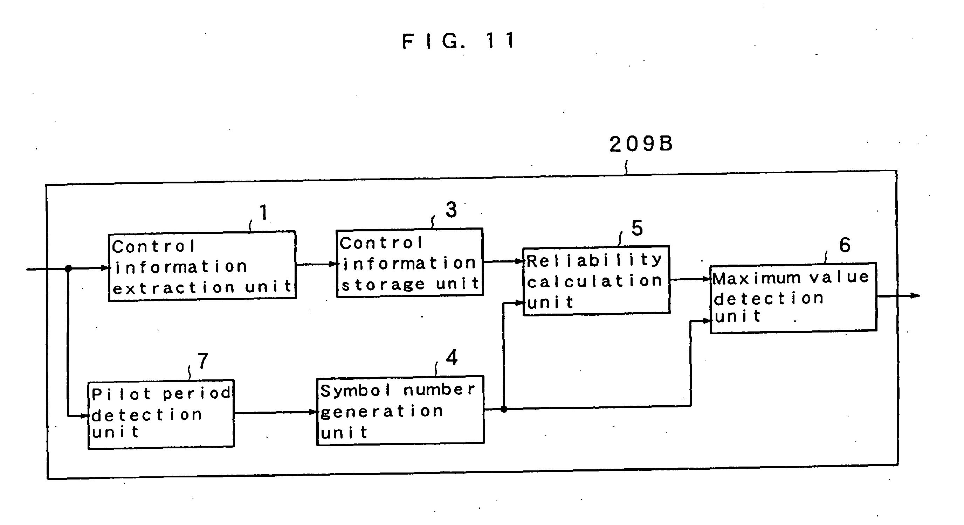

The configuration of a frame synchronization detector 209B according to the second embodiment is shown in Fig. 11. The frame synchronization detector 209B includes a control information extraction unit 1, a control information storage unit 3, a symbol number generation unit 4, a reliability calculation unit 5, a maximum value detection unit 6 and a pilot period detection unit 7.

The pilot period detection unit 7 detects the period in which the pilot signal is arranged with respect to the signal output from the FFT 205 shown in Fig. 3. In the case under consideration, the SP signal is used as a pilot signal for the Japanese terrestrial digital broadcast system. Based on the period of the SP signal detected by the pilot period detection unit 7, the symbol number generation unit 4 generates, among the symbol numbers 0 to 203, selected one of a group of symbol numbers (0, 4, 8 and so forth) of which the remainder is 0 after being divided by 4, a group of symbol numbers (1, 5, 9 and so forth) of which the remainder is 1 after being divided by 4, a group of symbol numbers (2, 6, 10 and so forth) of which the remainder is 2 after being divided by 4 and a group of symbol numbers (3, 7, 11 and so forth) of which the remainder is 3 after being divided by 4. Incidentally, the symbol number generation unit 4 may generate a part of any one of the groups sequentially.

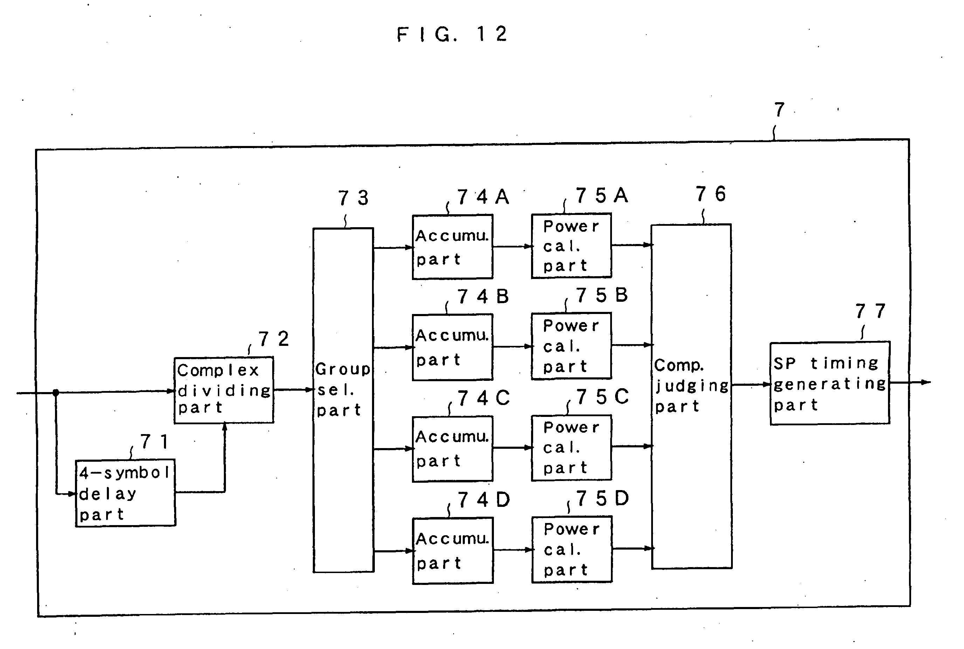

The configuration of the pilot period detection unit 7 is shown in Fig. 12. A 4-symbol delay part 71 delays the carrier with the SP signal arranged therein by four symbol periods with respect to the signal output from the FFT shown in Fig. 3. A complex dividing part 72 subjects the signal output from the FFT 205 to the complex division with a signal 4 symbol periods delayed by the 4-symbol delay part 71. The complex dividing part 72 may alternatively be so configured as to normalize the signal amplitude after the conjugate complex multiplication of the signal output from the FFT 205 by the signal 4 symbol periods delayed by the 4-symbol delay part 71. A group selecting part 73 selectively divides the signal output from the complex dividing part 72 into four signal groups A, B, C and D.

Accumulating parts 74A, 74B, 74C, 74D accumulate by adding the signals of each of the groups A, B, C, D selected by the group selecting part 73. Power calculating parts 75A, 75B, 75C, 75D calculates the power from the signals accumulated in the accumulating parts 74A, 74B, 74C, 74D, respectively. A comparison judging part 76 compares the power calculated by the power calculating parts 75A, 75B, 75C, 75D and detecting the group of the maximum value, outputs the result thereof. A SP timing generating part 77 generates a SP timing signal indicating the period of the SP signal based on the result of the comparison judging part 76.

In the method according to the second embodiment, as compared with the method of the first embodiment, the reliability is calculated only for the symbol number group having a high probability representing a part of all the symbol number groups. Thus, without deteriorating the detection performance considerably, the processing time, the power consumption and the circuit size can be reduced. In the example operation described above, the reliability is calculated using the SP signal for the symbols representing only one fourth of all the symbols.

### (Third Embodiment)

Now, a frame synchronization detector according to a third embodiment of the invention is explained. In the third embodiment, the component elements for executing the same signal processing as in the first embodiment are designated by the same reference numerals, respectively, and are not described again.

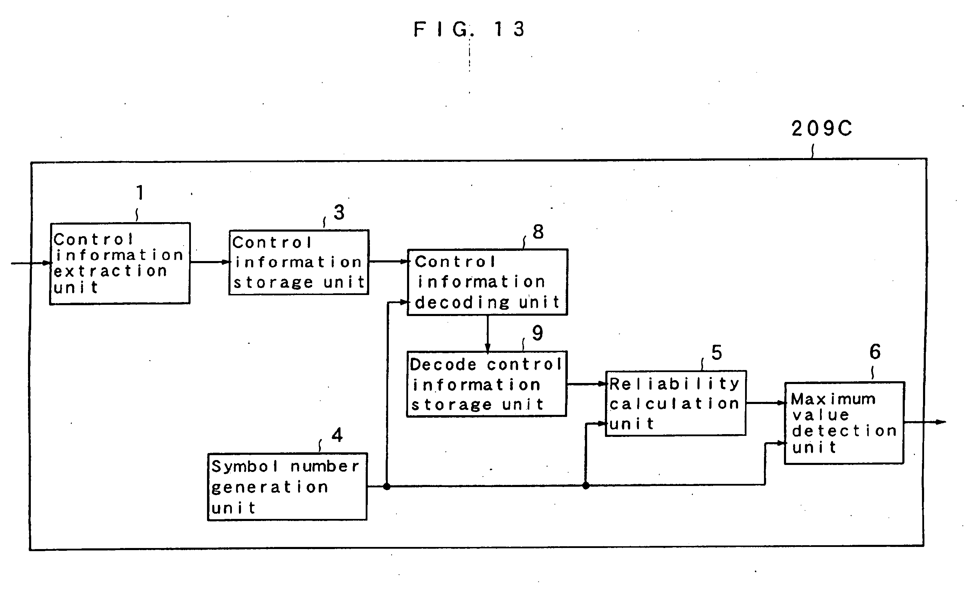

The configuration of a frame synchronization detector 209C according to the third embodiment is shown in Fig. 13. The frame synchronization detector 209C includes a control information extraction unit 1, a control information storage unit 3, a symbol number generation unit 4, a reliability calculation unit 5, a maximum value detection unit 6, a control information decoding unit 8 and a decode control information storage unit 9.

The control information decoding unit 8, based on the provisional symbol number generated from the symbol number generation unit 4, decodes by correcting the error of the control information stored in the control information storage unit 3. In the case under consideration, of all the TMCC signals stored in the control information storage unit 3, 184 bits B20 to B203 representing the TMCC information and the parity bits are decoded by error correction.

The decode control information storage unit 9 stores the control information decoded by error correction by the control information decoding unit 8. In the case under consideration, of all the TMCC signals stored in the control information storage unit 3, the 20 bits B0 to B 19 not intended for error correction decoding by the control information decoding unit 8 and the 184 bits B20 to B203 decoded by error correction by the control information decoding unit 8 are stored. The reliability calculation unit 5, by referring to the TMCC signal stored in the decode control information storage unit 9, calculates the reliability corresponding to the provisional symbol number output from the symbol number generation unit 4.

Alternatively, the control information decoding unit 8, in addition to the signal decoded by error correction as a result of the error correction decoding process, outputs the number of bits with errors corrected and, if the error correction thereof is impossible, a flag indicating the fact. These information are supplied to the reliability calculation unit 5, which, based on these information, may increase or decrease the reliability. Specifically, although the control information decoding unit 8 may execute the error correction decoding process, the number of code errors to be decoded may transcend the error correction ability of the control information decoding unit 8 and the error correction decoding process may be impossible. In such a case, a predetermined numerical value N800 is output to the reliability calculation unit 5 as a decoding reliability.

In the case where the error of M bits is corrected as the result of the error correction decoding process executed in the control information decoding unit 8, on the other hand, a predetermined numerical value N81M is output to the reliability calculation unit 5 as a decoding reliability. The reliability calculation unit 5 receives the decoding reliability output from the control information decoding unit 8. The decoding reliability is added to one or a plurality of reliabilities output from the reliability judging part 52 by the adding part 53 in the reliability calculation unit 5.

In the method according to the third embodiment, as compared with the method of the first embodiment, the reliability is calculated using the control information decoded by error correction for an improved detection performance.

### (Fourth Embodiment)

Next, a frame synchronization detector according to a fourth embodiment of the invention is explained. In this embodiment, the component elements for executing the same signal processing as in the second and third embodiments are designated by the same reference numerals, respectively, and not described again.

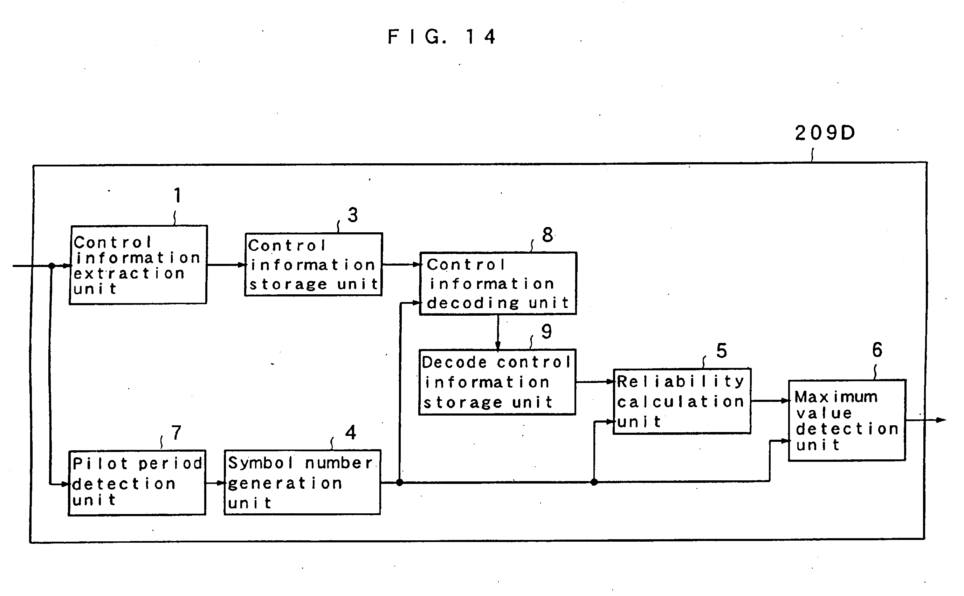

Fig. 14 shows a block configuration of a frame synchronization detector 209D according to the fourth embodiment. As shown in Fig. 14, the frame synchronization detector 209D has the configuration of both the second and third embodiments at the same time.

With the configuration of this embodiment, as compared with that of the first embodiment, both the processing time is reduced and the detection performance is improved.

In all of the first to fourth embodiments described above, the frame synchronization detector 209 is not necessarily operated at the timing of each symbol as long as the receiver is in operation. Especially during the initial period of several to several tens of symbols following the start of the receiving operation, as much information as required for frame synchronization detection process may not yet be stored in the control information storage unit 3. During the period when the information has yet to be stored, therefore, the operation of the frame synchronization detector 209 may be suspended.

In all of the first to fourth embodiments described above, the control information storage unit 3 may assume a predetermined initial value of the stored data at the time of starting the receiving operation. Further, the control information storage unit 3 may hold the value "1" for all of the 204 bits as an initial value of the stored data at the time of starting the receiving operation.

In the case where the maximum value of the reliability detected by the maximum value detection unit 6 exceeds a predetermined threshold value N600 in all of the first to fourth embodiments described above, a steady frame synchronization frame is assumed to have been established, so that the subsequently output symbol number is incremented by one for each symbol. However, the symbol number following the symbol number 203 is zero. In the process, the operation of the symbol number generation unit 4 and the reliability calculation unit 5 may be suspended.

All the embodiments are described above based on ISDB-T providing the terrestrial digital broadcast system in Japan. Nevertheless, the embodiments are equally applicable to DBV-T providing the terrestrial digital broadcast system employed in Europe, etc. In such a case, the frame synchronization is detected using the control information called the TPS signal instead of the TMCC signal. The aforementioned embodiments are applicable not only to DBV-T but also to a standard analogous to and associated with a similar transmission scheme to DBV-T. In all of the embodiments described above, the configuration may be partly or wholly formed of integrated circuits. In the OFDM receiving apparatus 201 A shown in Fig. 3, for example, all the circuit blocks ranging from the A/D converter 203 to the error corrector 207 may be collectively formed in a single integrated circuit.

## Claims

1. A receiving apparatus for demodulating broadcast/communication data from an Orthogonal Frequency Division Multiplexing signal, OFDM signal, with control information including a plurality of pieces of control data inserted therein, the apparatus comprising:
a tuner (202) which is configured to select a channel;
an A/D converter (203) which is configured to convert a received signal into a detected digital signal;
a quadrature demodulator (204) which is configured to demodulate the digital signal and which is configured to convert the detected digital signal into a baseband OFDM signal;
a fast Fourier transformer, FFT (205), which is configured to subject said baseband OFDM signal of said quadrature demodulator (204) to a fast Fourier transform and is operable to give an output by converting a time-domain signal into a frequency-domain carrier signal;
a demodulator (206) which is configured to demodulate the frequency-domain carrier signal to produce a demodulated signal by selecting one of a coherent demodulation and a differential demodulation and to output the demodulated signal;
an error corrector (207) which is configured to decode the demodulated signal by error correction to produce digital data;
a data decoder (208) which is configured to decode the digital data obtained in said error corrector (207) and to output at least one of a video signal and an audio signal; and
a frame synchronization detector (209) which is configured to detect a frame synchronization of the frequency-domain carrier signal to synchronize the frame based on the frame synchronization and which is configured to supply a symbol number to said demodulator (206) and said error corrector (207); wherein
said frame synchronization detector (209) includes:
a control information extraction unit (1) which is configured to extract the control information from the frequency-domain carrier signal;
a control information storage unit (3) which is configured to store one frame of the control information obtained from said control information extraction unit (1);
a symbol number generation unit (4) which is configured to output a provisional symbol number indicating the order in which provisional signals of the control information are arranged, which provisional signals are at an arbitrary timing;
a reliability calculation unit (5) which is configured to calculate a reliability of a plurality of control data other than a synchronized word based on comparing extracted control data with known control data wherein each control data corresponds to the provisional symbol number output from said symbol number generation unit (4) with reference to the control information stored in said control information storage unit (3); and
a maximum value detection unit (6) which is configured to compare a plurality of reliabilities based on provisional symbol numbers calculated in said reliability calculation unit (5) and to give an output by establishing the provisional symbol number as a normal symbol number at a specified timing when the maximum reliability is calculated.

2. The apparatus according to claim 1, wherein said frame synchronization detector (209) further includes a pilot period detection unit (7) which is configured to detect the period of arrangement of a pilot signal from said frequency-domain carrier signal, and said symbol number generation unit (4) is configured to output a provisional symbol number indicating an order in which the provisional signals of the control information are arranged, based on a period of the pilot signal detected by said pilot period detection unit (7).

3. The apparatus according to claim 1, wherein
the frame synchronization detector (207) further includes:
a control information decoding unit (8) which is configured to decode by correcting error of the control information stored in said control information storage unit (3), based on a provisional symbol number generated by said symbol number generation unit (4); and
a decode control information storage unit (9) which is configured to store the control information decoded by error correction by said control information decoding unit (8), and wherein
said reliability calculation unit (5) is configured to calculate a reliability of each control data corresponding to the provisional symbol number output from the symbol number generation unit (4) with reference to the control information stored in said decode control information storage unit (9).

4. The apparatus according to claim 1, wherein the frame synchronization detector (209) further includes:
a pilot period detection unit (7) which is configured to detect a period of arrangement of a pilot signal from said frequency-domain carrier signal;
a control information decoding unit (8) which is configured to decode by correcting error of the control information stored in said control information storage unit (3), based on a provisional symbol number generated by said symbol number generation unit (4); and
a decode control information storage unit (9) which is configured to store said control information decoded by error correction by said control information decoding unit (8), and
said reliability calculation unit (5) is configured to calculate a reliability of each control data corresponding to the provisional symbol number output from said symbol number generation unit (4) with reference to said control information stored in said decode control information storage unit (9).

5. A apparatus according to claim 1, 3 or 4, wherein said reliability calculation unit (5) includes:
a data extracting part (51) which is configured to extract at least one control data located at a specified bit position from the control information stored in said control information storage unit (3), based on the provisional symbol number output from said symbol number generation unit (4);
a reliability judging part (52) which is configured to judge a reliability of at least one control data extracted by said data extracting part and which outputs the reliability numerically; and
an adding part (53) which is configured to add at least one numerical value of the reliability output from said reliability judging part.

## Patentansprüche

1. Empfangseinrichtung zum Demodulieren von Rundfunk-/Kommunikationsdaten von einem Orthogonal-Frequenz-Division-Multiplexing-Signal, OFDM-Signal, mit Steuerinformation, die eine Vielzahl von Stücken von Steuerdaten darin eingesetzt enthält, wobei die Einrichtung umfasst:
einen Tuner (202), der konfiguriert ist, um einen Kanal auszuwählen;
einen A/D-Umsetzer (203), der konfiguriert ist, um ein empfangenes Signal in ein detektiertes digitales Signal umzusetzen;
einen Quadraturdemodulator (204), der konfiguriert ist, um das digitale Signal zu demodulieren, und der konfiguriert ist, um das detektierte digitale Signal in ein Basisband-OFDM-Signal umzusetzen;
eine Einrichtung zur schnellen Fourier-Transformation, FFT (205), die konfiguriert ist, um das Basisband-OFDM-Signal des Quadraturdemodulators (203) in einer schnellen Fourier-Transformation umzusetzen, und der zu betreiben ist, um einen Ausgang auszugeben, indem ein Zeitdomain-Signal in ein Frequenz-Domain-Trägersignal umgesetzt wird;
einen Demodulator (206), der konfiguriert ist, um das Frequenz-Domain-Trägersignal zu demodulieren, um ein demoduliertes Signal zu erzeugen, indem eine kohärente Demodulation oder eine Differentialdemodulation ausgewählt wird, und um das demodulierte Signal auszugeben;
eine Fehlerkorrektureinrichtung (206), die konfiguriert ist, um das demodulierte Signal durch eine Fehlerkorrektur zu demodulieren, um digitale Daten zu erzeugen;
einen Datendekoder (208), der konfiguriert ist, um die digitalen Daten, die in der Fehlerkorrektureinrichtung (207) erhalten werden, zu decodieren und wenigstens ein Videosignal oder ein Audiosignal auszugeben; und
einen Rahmensynchronisationsdetektor (209), der konfiguriert ist, um eine Rahmensynchronisation des Frequenz-Domain-Trägersignals zu detektieren, um den Rahmen basierend auf der Rahmensynchronisation zu synchronisieren, und der konfiguriert ist, um eine Symbolzahl an den Demodulator (206) und die Fehlerkorrektureinrichtung (207) zu liefern; wobei
der Rahmensynchronisationsdetektor (209) umfasst:
eine Kontrollinformation-Extraktionseinheit (1), die konfiguriert ist, um die Steuerinformation aus dem Frequenz-Domain-Trägersignal zu extrahieren;
eine Steuerinformationsspeichereinheit (3), die konfiguriert ist, um einen Rahmen der Steuerinformation zu speichern, die von der Steuerinformation-Extraktionsheinheit (1) erhalten wird;
eine Symbolzahl-Generatoreinrichtung (4), die konfiguriert ist, eine provisorische Symbolzahl auszugeben, die die Reihenfolge angibt, in der provisorische Signale der Steuerinformation angeordnet sind, wobei die provisorischen Signale bei einem vorgegebenen Zeitablauf sind;
eine Zuverlässigkeits-Berechnungseinheit (5), die konfiguriert ist, um die Zuverlässigkeit einer Vielzahl von Steuerdaten außer einem synchronisierten Wort zu berechnen auf der Basis, dass die extrahierten Kontrolldaten mit bekannten Kontrolldaten verglichen werden, wobei jede der Steuerdaten der provisorischen Symbolnummer entspricht, die von der Symbolnummer-Generatoreinheit (4) in Bezug auf die Steuerinformation ausgegeben wird, die in der Steuerinformationsspeichereinheit (3) gespeichert ist; und
eine Maximalwert-Detektoreinheit (5), die konfiguriert ist, um eine Vielzahl der Zuverlässigkeiten auf der Basis der provisorischen Symbolnummern zu vergleichen, die in der Zuverlässigkeitsberechnungseinheit (5) berechnet wurden, und einen Ausgang dadurch auszugeben, dass die provisorische Symbolnummer als normale Symbolnummer einer spezifizierten Zeit eingesetzt wird, wenn die maximale Zuverlässigkeit berechnet ist.

2. Einrichtung nach Anspruch 1, worin der Rahmensynchronisationsdetektor (209) ferner eine Pilot-Perioden-Detektoreinheit (7) aufweist, die konfiguriert ist, um die Anordnungsperiode eines Pilotsignals von dem Frequenzdomain-Trägersignal zu detektieren, wobei die Symbolzahlgeneratoreinheit (4) konfiguriert ist, um eine provisorische Symbolzahl auszugeben, die eine Reihenfolge zeigt, in der die provisorischen Signale der Steuerinformation angeordnet sind, basierend auf einer Periode des Pilotsignals, das von der Pilotperioden-Detektoreinheit (7) detektiert wird.

3. Einrichtung nach Anspruch 1, worin
der Rahmensynchronisationsdetektor (207) ferner umfasst:
eine Steuerinformation-Decodereinheit (8), die konfiguriert ist, um durch eine Korrektur des Fehlers der Steuerinformation, die in der Steuerinformationsspeichereinheit gespeichert ist, basierend auf einer provisorischen Symbolzahl zu decodieren, die von der Symbolzahlgeneratoreinheit (4) erzeugt wird; und
eine Decodierungskontrollinformationsspeichereinheit (9), die konfiguriert ist, um die Steuerinformation zu speichern, die durch die Fehlerkorrektur durch die Kontrollinformationssteuereinheit (8) decodiert wird, und wobei
die Zuverlässigkeitsberechnungseinheit (5) konfiguriert ist, um eine Zuverlässigkeit von jeden Steuerdaten entsprechend der provisorischen Symbolzahl zu berechnen, die von der Symbolzahlgeneratoreinheit (4) ausgegeben wird unter Bezugnahme auf die Steuerinformation, die in der Decodierungssteuerinformations-Steuereinheit gespeichert ist.

4. Einrichtung nach Anspruch 1, worin der Rahmensynchronisationsdetektor (209) ferner umfasst:
eine Pilot-Perioden-Detektoreinheit (7), die konfiguriert ist, um eine Anordnungsperiode des Pilotsignals in dem Frequenzdomain-Trägersignal zu detektieren;
eine Steuerinformations-Decodereinheit (8), die konfiguriert ist, um durch Korrektur des Fehlers der Steuerinformation, die in der Steuerinformations-Speichereinheit (3) gespeichert ist, basierend auf einer provisorischen Symbolzahl zu decodieren, die von der SymbolzahlGeneratoreinheit (4) erzeugt wird; und
eine Decoder-Steuerinformation-Speichereinheit (9), die konfiguriert ist, um die Steuerinformation, die durch Fehlerkorrektur durch die Steuerinformations-Decodereinheit (8) decodiert wird, zu speichern, und wobei
die Zuverlässigkeitsberechnungseinheit (5) konfiguriert ist, um eine Zuverlässigkeit von jeglichen Steuerdaten entsprechend der provisorischen Symbolzahl zu berechnen, die von der Symbolzahlgeneratoreinrichtung (4) ausgegeben wird, unter Bezugnahme auf die Steuerinformation, die in der Decodersteuerinformations-Speichereinheit (9) gespeichert ist.

5. Einrichtung nach Anspruch 1, 3 oder 4, worin die Zuverlässigkeits-Berechnungseinheit (5) umfasst:
einen Datenextraktionsteil (51), der konfiguriert ist, um wenigstens eine der Steuerdaten, die an einer spezifizierten Bit-Position liegt, aus der Steuerinformation zu extrahieren, die in der Steuerinformationsspeichereinheit (3) gespeichert ist, basierend auf der provisorischen Symbolzahl, die von der Symbolzahlgeneratoreinheit (4) ausgegeben wird;
einen Zuverlässigkeitsbeurteilungsteil (52), der konfiguriert ist, um die Zuverlässigkeit von wenigstens einer der Steuerdaten zu beurteilen, die von dem Datenextraktionsteil extrahiert weden, und die die Zuverlässigkeit nummerisch ausgibt; und
einen Additionsteil (53), der konfiguriert ist, um wenigstens einen nummerischen Wert der Zuverlässigkeit hinzu zu addieren, der von dem Zuverlässigkeits-Beurteilungsteil ausgegeben wird.

## Revendications

1. Dispositif de réception pour la démodulation de données d'émission/communication d'un signal à porteuses orthogonales multiplexées par répartition en fréquence, le signal OFDM, avec l'information de commande incluant une pluralité de segments de données de commande insérées là dedans, le dispositif comprenant :
- un tuner (202) qui est configuré pour sélecter un canal ;
- un convertisseur A/D (203) qui est configuré pour convertir un signal reçu dans un signal digital détecté ;
- un démodulateur de quadrature (204) qui est configuré pour démoduler le signal digital et qui est configuré pour convertir le signal digital détecté dans un signal OFDM en bande de base ;
- un transformateur Fourier rapide, FFT (205), qui est configuré pour soumettre ledit signal OFDM en bande de base dudit démodulateur de quadrature (204) à une transformée Fourier rapide et est utilisable pour donner une sortie par la conversion d'un signal de domaine temporel dans un signal porteur de domaine fréquentiel ;
- un démodulateur (206) qui est configuré pour démoduler le signal porteur de domaine fréquentiel pour produire un signal démodulé par la sélection d'une d'entre une démodulation cohérente et une démodulation différentielle et pour faire sortir le signal démodulé ;
- un correcteur d'erreurs (207) qui est configuré pour décoder le signal démodulé par la correction d'erreurs pour produire les données digitales ;
- un décodeur de données (208) qui est configuré pour décoder les données digitales obtenues dans ledit correcteur d'erreurs (207) et pour faire sortir au moins l'un d'entre un signal vidéo et un signal audio ; et
- un détecteur de synchronisation de trames (209) qui est configuré pour détecter une synchronisation de trames du signal porteur de domaine fréquentiel pour synchroniser la trame basée sur la synchronisation de trames, et qui est configuré pour fournir un nombre symbole audit démodulateur (206) et audit correcteur d'erreurs (207) ; où
- ledit détecteur de synchronisation de trames (209) comprend :
- une unité d'extraction d'information de commande (1) qui est configurée pour extraire l'information de commande à partir du signal porteur de domaine fréquentiel ;
- une unité de stockage d'information de commande (3) qui est configurée pour stocker une trame de l'information de commande obtenue de ladite unité d'extraction d'information de commande (1) ;
- une unité de génération de nombres symbole (4) qui est configurée pour faire sortir un nombre symbole provisoire indiquant l'ordre dans lequel les signaux provisoires de l'information de commande sont arrangés, lesquels signaux provisoires sont à un moment quelconque ;
- une unité de calcul de la fiabilité (5) qui est configurée pour calculer une fiabilité d'une pluralité de données de commande autres que le mot synchronisé basé sur la comparaison des données de commande extraites avec les données de commande connues où chaque donnée de commande correspond au nombre symbole provisoire sorti de ladite unité de génération de nombres symbole (4) avec référence à l'information de commande stockée dans ladite unité de stockage d'information de commande (3) ; et
- une unité de détection de valeurs maximales (6) qui est configurée pour comparer une pluralité de fiabilités basées sur les nombres symbole provisoires calculés dans ladite unité de calcul de la fiabilité (5) et pour donner une valeur de sortie en établissant le nombre symbole provisoire comme un nombre symbole normal à un moment spécifié quand la fiabilité maximale est calculée.

2. Le dispositif selon la revendication 1, où ledit détecteur de synchronisation de trames (209) comprend de plus une unité de détection de période pilote (7) qui est configurée pour détecter la période de configuration d'un signal pilote à partir dudit signal porteur de domaine fréquentiel, et ladite unité de génération de nombres symbole (4) est configurée pour faire sortir un nombre symbole provisoire indiquant un ordre dans lequel les signaux provisoires de l'information de commande sont arrangés, basé sur une période du signal pilote détecté par ladite unité de détection de période pilote (7).

3. Le dispositif selon la revendication 1, où
le détecteur de synchronisation de trames (209) comprend de plus :
- une unité de décodage d'information de commande (8) qui est configurée pour décoder en corrigeant les erreurs de l'information de commande stockée dans ladite unité de stockage d'information de commande (3) basée sur un nombre symbole provisoire généré par ladite unité de génération de nombres symbole (4) ; et
- une unité de stockage d'information de commande décodée (9) qui est configurée pour stocker l'information de commande décodée par la correction d'erreurs par ladite unité de décodage d'information de commande (8), et où
- ladite unité de calcul de la fiabilité (5) est configurée pour calculer une fiabilité de chaque donnée de commande correspondant au nombre symbole provisoire sorti de l'unité de génération de nombres symbole (4) avec référence à l'information de commande stockée dans ladite unité de stockage d'information de commande décodée (9).

4. Le dispositif selon la revendication 1, où ledit détecteur de synchronisation de trames (209) comprend de plus :
- une unité de détection de période pilote (7) qui est configurée pour détecter une période de configuration d'un signal pilote à partir dudit signal porteur de domaine fréquentiel;
- une unité de décodage d'information de commande (8) qui est configurée pour décoder en corrigeant les erreurs de l'information de commande stockée dans ladite unité de stockage d'information de commande (3) basée sur un nombre symbole provisoire généré par ladite unité de génération de nombres symbole (4) ; et
- une unité de stockage d'information de commande décodée (9) qui est configurée pour stocker ladite information de commande décodée par la correction d'erreurs par ladite unité de décodage d'information de commande (8), et où
- ladite unité de calcul de la fiabilité (5) est configurée pour calculer une fiabilité de chaque donnée de commande correspondant au nombre symbole provisoire sorti de ladite unité de génération de nombres symbole (4) avec référence à ladite information de commande stockée dans ladite unité de stockage d'information de commande décodée (9).

5. Le dispositif selon la revendication 1, 3 ou 4, où ladite unité de calcul de la fiabilité (5) comprend :
- une partie d'extraction de données (51) qui est configurée pour extraire au moins une donnée de commande logée à une position de bit spécifiée à partir de l'information de commande stockée dans ladite unité de stockage d'information de commande (3), basée sur le nombre symbole provisoire sorti de ladite unité de génération de nombres symbole (4) ;
- une partie de jugement de fiabilité (52) qui est configurée pour juger une fiabilité d'au moins une donnée de commande extraite par ladite partie d'extraction de données et qui fait sortir numériquement la fiabilité ; et
- une partie d'addition (53) qui est configurée pour ajouter au moins une valeur numérique de la fiabilité sortie de ladite partie de jugement de la fiabilité.
